# EUROPEAN PATENT APPLICATION

(11) **EP 1 246 099 A1**
(43) Date of publication of application: **02.10.2002**
(21) Application number: 02001062.5
(22) Date of filing: 21.01.2002
(51) Int. Cl.: G06F 17/60

(54) **Estimated price providing apparatus, system and method, computer program, and computer readable storage medium**

(30) Priority: 23.01.2001 JP 2001014545; 18.10.2001 JP 2001320800
(71) Applicant: Mazda Motor Corporation, Aki-gun, Hiroshima 730-8670 (JP)
(72) Inventor: Takaoka, Hiroki, Aki-gun, Hiroshima 730-8670 (JP); Yukami, Takashi, Aki-gun, Hiroshima 730-8670 (JP)
(74) Representative: Müller-Boré & Partner Patentanwälte

(57) **Abstract**

An estimated price providing system allows a user of a user terminal to select an article with desired specifications in accordance with predetermined choices, which are set in advance in association with article specifications that a manufacturer can supply, in response to operation at the user terminal, which accesses a vehicle manufacturer server. When the article with the desired specifications is selected, or when the user makes request operation at the terminal, the vehicle manufacturer server or a dealer server calculates an estimated price when a dealer sells the article with the desired specifications by referring to a storage device, in which estimated prices that the dealer can offer are registered in advance for respective choices, in accordance with the desired specifications, and provides the calculated estimated price per article to the terminal.

## Description

### FIELD OF THE INVENTION

The present invention relates to the field of a price information providing apparatus that provides on-line price information associated with an article to a user's information terminal via a communication line.

### BACKGROUND OF THE INVENTION

As a conventional information providing apparatus that provides price information associated with an article to the user, the following apparatus is known. That is, as disclosed in Japanese Patent Laid-Open No. 5-274326, catalog information of articles as objects for sale is stored in a database in the form of multimedia information, and information associated with a given article specified on a computer system is read out from the database to allow external output, estimation, shipping inquiry, order reception process, and the like.

In the field of automobiles as a representative vehicle, a technique for providing on-line information associated with a vehicle to a user's information terminal via a communication line has been proposed. As an example of such technique, Japanese Patent Laid-Open No. 7-199820 proposes a technique for making on-line virtual exhibition of automobiles.

However, the technique proposed by Japanese Patent Laid-Open No. 7-199820 cannot inform on line the user of the price of a custom article that the user wants, and the estimated price presented prior to sales of that article.

Since Japanese Patent Laid-Open No. 5-274326 does not propose any practical method for an on-line estimation process, and only discloses that "use a method used in a conventional sales business system", it does not contain any disclosure about on-line presentation of the estimated price to the user.

### SUMMARY OF THE INVENTION

The present invention has been proposed to solve the conventional problems, and has as its object to provide an estimated price providing apparatus, estimated price providing system, estimated price providing method, a computer program and a computer readable storage medium which allow the user to easily and pleasantly select an article with desired specifications from those that a manufacturer can supply, and efficiently provide the estimated price of the selected article with desired specifications.

In order to achieve the above object, an estimated price providing apparatus according to the present invention is characterized by the following arrangement.

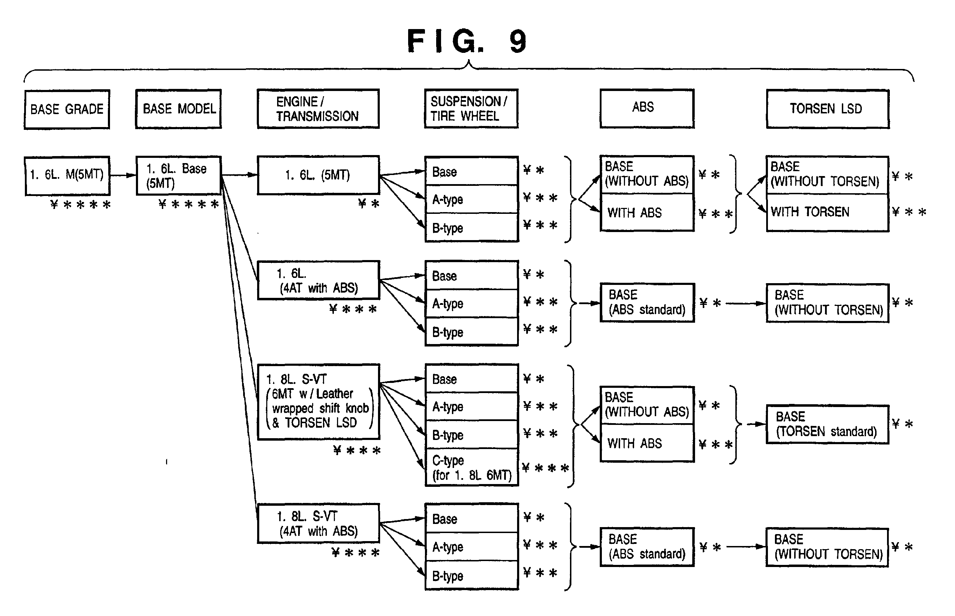

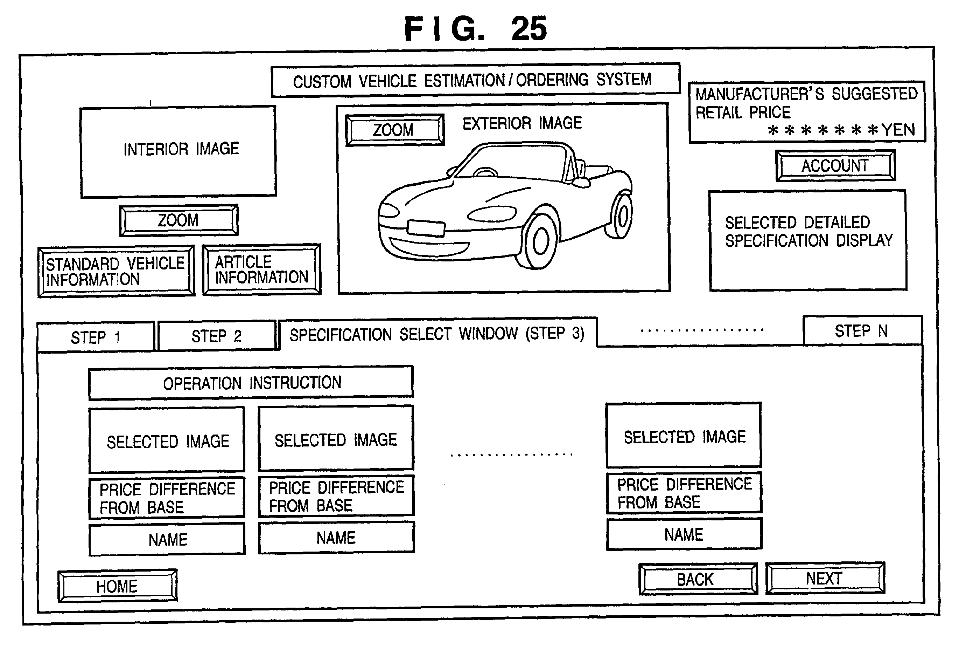

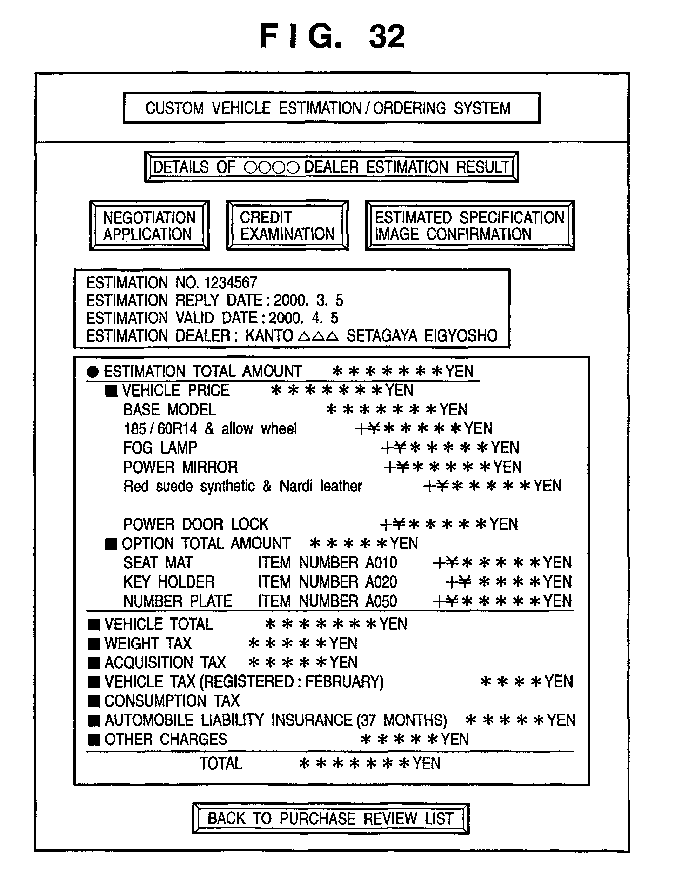

More specifically, an estimated price providing apparatus comprises:
a storage device (35, Figs. 9 to 14) in which estimated prices that a dealer can offer are registered in advance for respective predetermined choices in accordance with the choices that are set in advance in association with article specifications that a manufacturer can supply;
customize means (customize function: M2, Fig. 25) for allowing a user of an information terminal (5) to select an article of desired specifications in accordance with the predetermined choices by operations from the information terminal which is connected via a communication line to allow two-way communications; and
estimated price providing means (estimated price providing function: M3, M4, Fig. 32) for, when the article with the desired specifications is selected by the customize means or when the user makes request operation at the information terminal later, calculating an estimated price when the dealer sells the article with the desired specifications by referring to the estimated prices for respective choices registered in the storage device in accordance with the desired specifications, and providing the calculated estimated price per article to the information terminal.

According to the estimated price providing apparatus with the above apparatus arrangement, the user can easily and pleasantly select an article with desired specifications from article specifications that the manufacturer can supply, and the estimated price of the selected article with desired specifications can be efficiently provided to the user.

In a preferred embodiment, the estimated price providing means provides the estimated price per article with the desired specifications using an e-mail message in response to user's request operation at the information terminal after the customize means selects the article with the desired specifications. With this arrangement, the user can easily and pleasantly select an article with desired specifications from article specifications that the manufacturer can supply as if he or she were playing a game, and the estimated price of the selected article with desired specifications can be efficiently provided to the user via an e-mail message requiring less labor, thus contributing to a price reduction of the article.

In a preferred embodiment, at least individual storage areas are assured on the storage device in correspondence with a plurality of dealers,
the customize means includes dealer select means (dealer select function) for selecting a dealer that the user of the information terminal prefers from the plurality of dealers, and
the estimated price providing means provides the estimated price per article with the desired specifications by referring to the storage area of the storage device, which correspond to the dealer selected by the dealer select means.

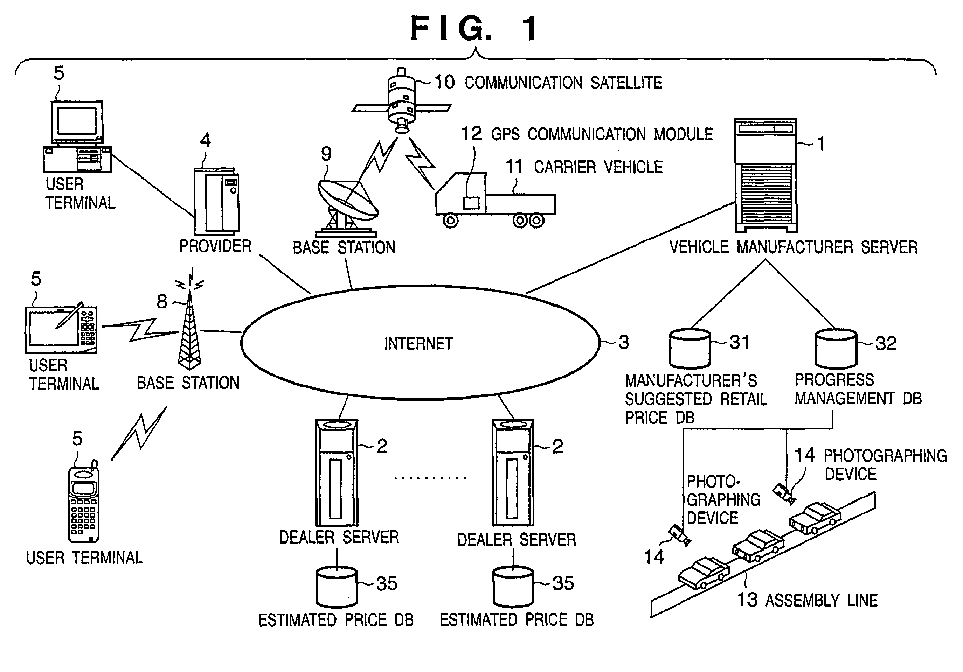

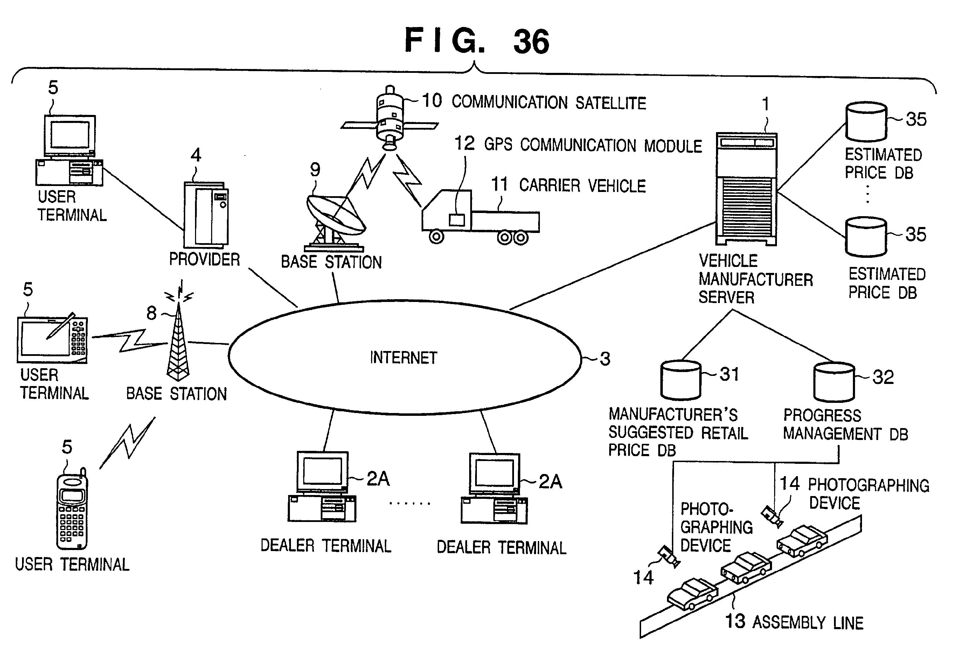

According to the estimated price providing apparatus (1 and 2 in Fig. 1, 1 in Fig. 36) with the above apparatus arrangement, the user himself or herself can select a desired dealer, thus improving convenience.

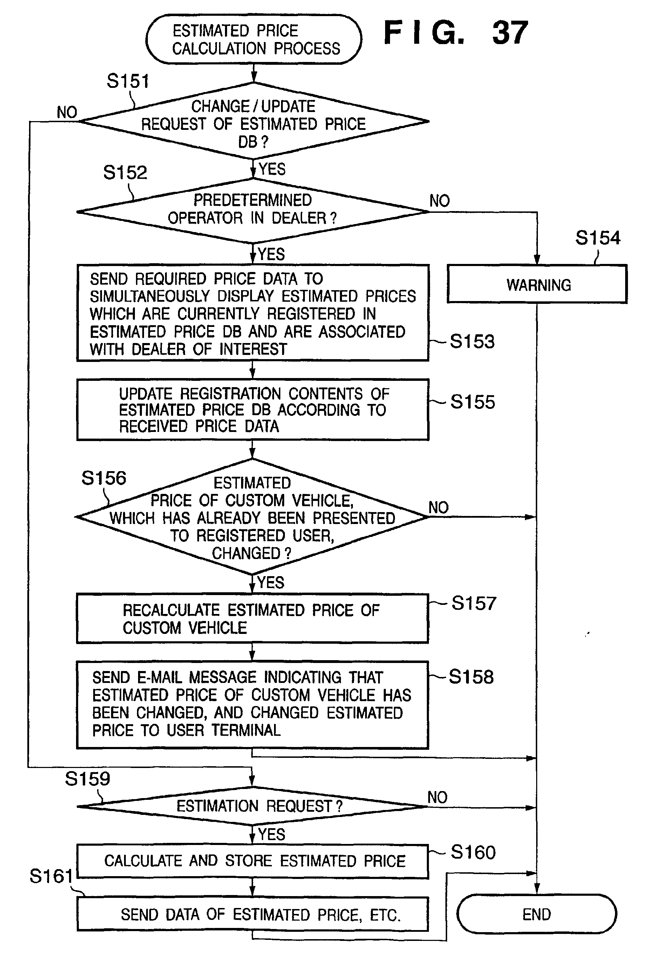

Preferably, for example, when the storage device is managed by a third party different from the plurality of dealers,
the apparatus further comprises estimated price update means (estimated price update function) for allowing the dealers corresponding to individual storage areas to update storage contents for respective dealers stored in the individual storage areas of the storage device, and
the estimated price providing means (1, Fig. 37) can refer to the storage area of the storage device corresponding to the dealer selected by the dealer select means upon providing the estimated price per article with the desired specifications to the information terminal. In this manner, practice of the estimated price providing apparatus with one of the above apparatus arrangements can be started with minimum time and cost without preparing for special hardware and software on the dealer side, and system management after the beginning of operation is easy.

In a preferred embodiment, the storage means, the customize means, the dealer select means, and the estimated price providing means are implemented by processing functions in a single information processing apparatus (1, Fig. 37). In this manner, practice of the estimated price providing apparatus with one of the above apparatus arrangements can be started with minimum time and cost without preparing for special hardware and software on the dealer side, and system management after the beginning of operation is easy.

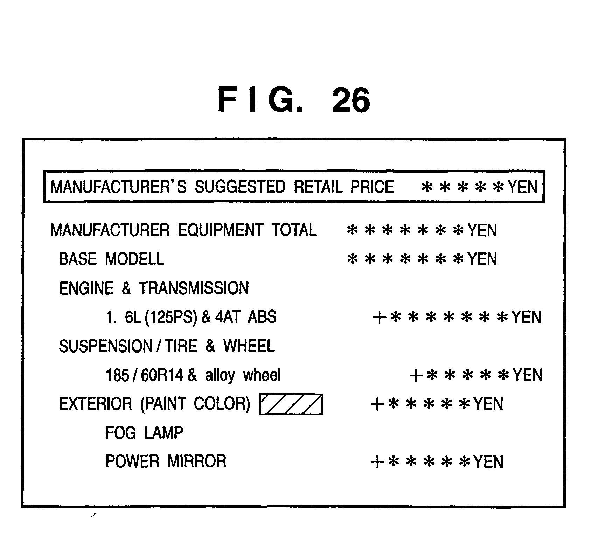

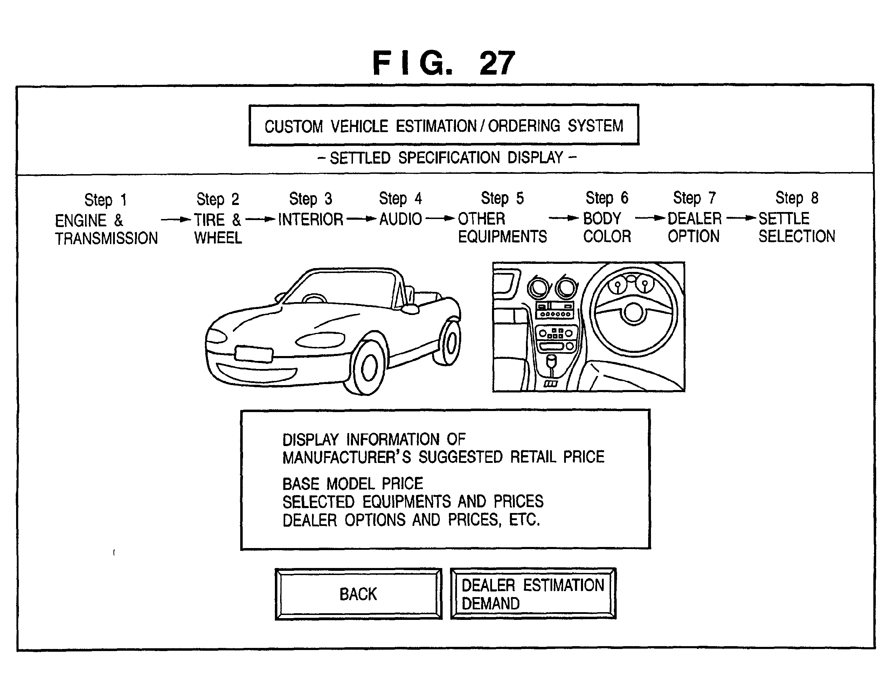

For example, the customize means informs of manufacturer's suggested retail prices registered in advance for respective choices by the manufacturer in a process in which the user of the information terminal selects the article with the desired specifications (Figs. 26, 27), and
the estimated price providing means provides the estimated price (Fig. 32) per article with the desired specifications to the information terminal in response to user's request operation at the information terminal after the customize means selects the article with the desired specifications.

With this apparatus arrangement, a guideline of the purchasing price upon selecting an article with desired specifications can be presented to the user, thus improving user's convenience.

For example, the estimated price providing means preferably provides the estimated price per article with the desired specifications to the information terminal using an e-mail message, in which an address that specifies the dealer as a source is set, in response to user's request operation at the information terminal after the customize means selects the article with the desired specifications. With this arrangement, each dealer can efficiently appeal to the user for appraisal of the estimated price that the dealer can offer.

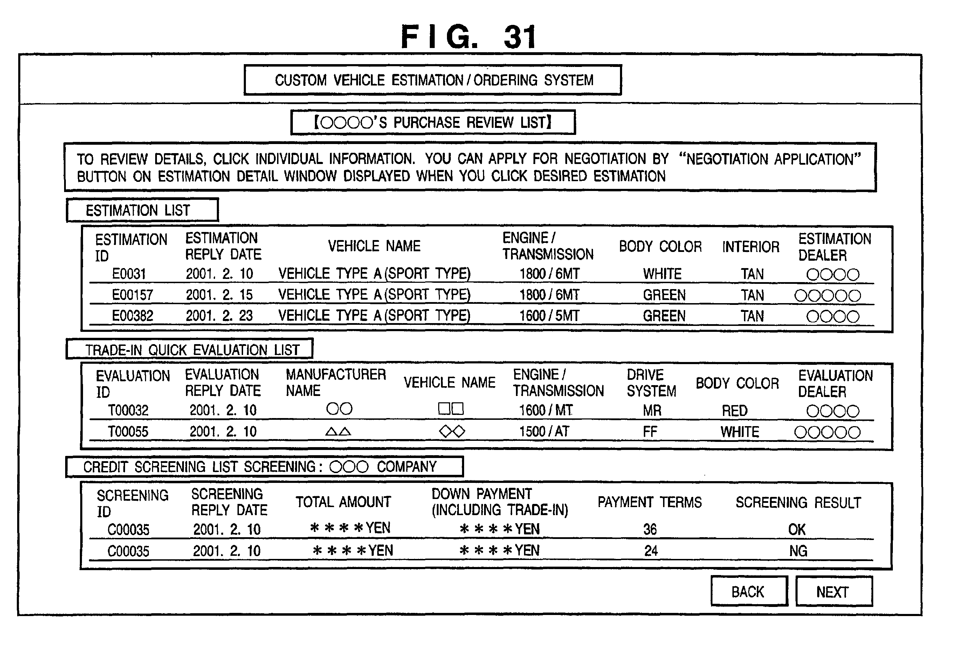

For example, the estimated price providing means preferably provides all estimated prices per article, which were previously provided to the user, to be able to be displayed as a list on the information terminal in response to a user's query request at the information terminal (Fig. 31). In this way, for example, when the user who is contemplating about the purchase of custom vehicles of identical specifications requests a plurality of dealers to offer estimated prices, the estimated prices that the individual dealers can offer are displayed in a list, thus improving user's convenience.

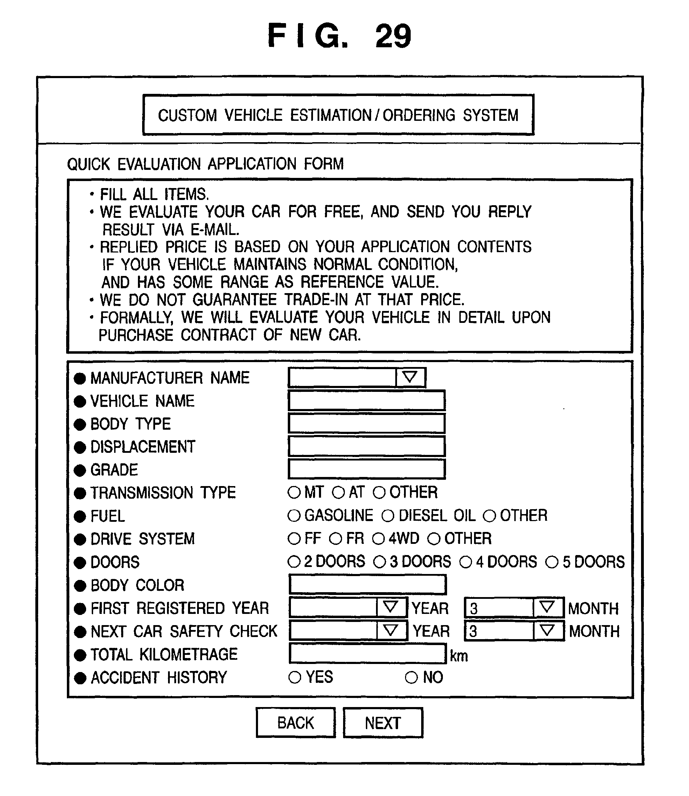

For example, the estimated price providing means preferably transfers an estimation request of a trade-in article to the dealer selected by the dealer select means when the estimation request of the trade-in article is received from the user of the information terminal in a process for providing the estimated price per article with the desired specifications to the information terminal (Fig. 29). In this fashion, the user's convenience can be improved, and business efficiency of a dealer can also be improved.

For example, the apparatus preferably further comprises estimated price update means for permitting to update storage contents of one of storage areas individually prepared on the storage device in correspondence with the plurality of dealers in response to a request from the dealer corresponding to that storage area, and denying update of the storage contents of the storage area by another dealer which does not correspond to the storage area.

In this case, more preferably, the estimated price update means permits to browse the storage contents of one of storage areas individually prepared on the storage device in correspondence with the plurality of dealers in response to a request from the dealer corresponding to that storage area, and denies browsing of the storage contents of the storage area by another dealer which does not correspond to the storage area.

With this apparatus arrangement, the estimated price individually set by a given dealer can be prevented from being interfered by a third party, the autonomy of sales business operations by dealers can be guaranteed, and the principle of free competition on the market can be honored.

For example, the estimated price update means preferably denies update of storage contents of the storage areas individually prepared on the storage device in correspondence with the plurality of dealers by the manufacturer. In this way, the estimated price individually set by a given dealer can be prevented from being interfered by a third party, the freedom of sales business operations by dealers can be guaranteed, and the principle of free competition on the market can be honored.

In any of the above apparatus arrangements, for example, the article is an automobile, and
the predetermined choices which are set in advance are restricted to customize a backbone that determines drive performance of the automobile as a first step, and are also restricted to select other specifications to have specifications selected in the first step as top priority in subsequent steps when the user of the information terminal customizes an automobile with desired specifications by the customize means.

In this case, the customize means executes in turn selection of drive system components that form a backbone of the automobile which can be manufactured by the manufacturer, and selection of wheel peripheral components registered in advance in correspondence with the selected drive system components. Hence, the user himself or herself can efficiently select an automobile with desired specifications as a custom automobile.

Upon implementing the estimated price providing apparatus with any of the above apparatus arrangement, at least one or all of the storage means, the customize means, and the estimated price providing means are preferably managed by the manufacturer. In this way, the load on business operations and cost of a dealer can be reduced. Especially, when the manufacturer manages all of the storage device, customize means, and estimated price providing means, since special hardware and software on the dealer side need not be prepared on the dealer side, practice of the estimated price providing apparatus with one of the above apparatus arrangements can be started with minimum time and cost. Furthermore, system management after the beginning of operation is easy.

Note that the above object can also be achieved by a program code that makes a computer implement the estimated price providing apparatus, a computer readable storage medium which stores that program code, an estimated price providing system which comprises the estimated price providing apparatus and an information terminal, and an estimated price providing method corresponding to that system.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate embodiments of the invention and, together with the description, serve to explain the principles of the invention.
Fig. 1 is a schematic diagram showing the overall arrangement of a custom vehicle estimation/ordering system in an embodiment of the present invention;
Fig. 2 is a block diagram showing an example of the internal arrangement of a vehicle manufacturer server 1, dealer server 2, and user terminal 5 in the embodiment of the present invention;
Fig. 3 is a block diagram showing a functional system of processing modules executed in the custom vehicle estimation/ordering system according to the embodiment of the present invention;
Fig. 4 is a chart showing transition of display windows in an initial process (M1) and vehicle customize process (M2);
Fig. 5 is a chart showing transition of display windows in an estimation/evaluation request process (M3) and an e-mail sending function upon issuing an estimation/evaluation request;
Fig. 6 is a chart showing transition of display windows in an estimation item confirm process (M4);
Fig. 7 is a chart showing transition of display windows in a credit screening process (M5) and a negotiation application process (M6), and an e-mail sending function upon credit screening and negotiation application;
Fig. 8 is a chart showing transition of display windows in a shipping query process (M7) and instruction process (M8) and an e-mail sending function upon issuing a shipping query;
Fig. 9 is a system chart showing limitations on choices which are referred to upon selecting a mechanism of vehicle type A (sport type) in the vehicle customize process (M2);
Fig. 10 is a system chart showing limitations on choices which are referred to upon selecting an interior of vehicle type A (sport type) in the vehicle customize process (M2);
Fig. 11 is a system chart showing limitations on choices which are referred to upon selecting an audio system of vehicle type A (sport type) in the vehicle customize process (M2);
Fig. 12 is a system chart showing limitations on choices which are referred to upon selecting a mechanism of vehicle type B (wagon type) in the vehicle customize process (M2);
Fig. 13 is a system chart showing limitations on choices which are referred to upon selecting an interior of vehicle type B (wagon type) in the vehicle customize process (M2);
Fig. 14 is a system chart showing limitations on choices which are referred to upon selecting an exterior of vehicle type B (wagon type) in the vehicle customize process (M2);
Fig. 15 is a flow chart of software executed by the user terminal 5 that receives services from the vehicle manufacturer server 1 in the embodiment of the present invention;
Fig. 16 is a flow chart showing a window display process common to respective processing modules executed by the vehicle manufacturer server 1 in the embodiment of the present invention;
Fig. 17 is a flow chart showing an outline of the overall process executed by the vehicle manufacturer server 1 in the embodiment of the present invention;
Fig. 18 is a flow chart showing the estimation/evaluation request process (M3) executed by the vehicle manufacturer server 1;
Fig. 19 is a flow chart showing the estimation item confirm process (M4) executed by the vehicle manufacturer server 1;
Fig. 20 is a flow chart showing the control process executed by the dealer server 2 in the embodiment of the present invention;
Fig. 21 is a flow chart showing the shipping query process (M7) executed by the vehicle manufacturer server 1;
Fig. 22 shows an example of a shipping status query window G-2 in the embodiment of the present invention;
Fig. 23 shows an example of a top window A-1 as a home page window in the embodiment of the present invention;
Fig. 24 shows an example of a home window A-2 in the embodiment of the present invention;
Fig. 25 shows an example of the format of vehicle customize window (B-1 to B-15) displayed in the vehicle customize process (M2);
Fig. 26 shows an example of an account window of a manufacturer's suggested retail price displayed upon operation of an "account" button shown in Fig. 25;
Fig. 27 shows an example of a selected specification display window B-15 displayed in the vehicle customize process (M2);
Fig. 28 shows an example of an estimation demand top window in the embodiment of the present invention;
Fig. 29 shows an example of an evaluation application input window C-1 in the embodiment of the present invention;
Fig. 30 shows an example of an ID/password input window D-1 in the embodiment of the present invention;
Fig. 31 shows an example of a purchase review information list window D-2 in the embodiment of the present invention;
Fig. 32 shows an example of an estimation item confirm window D-3 in the embodiment of the present invention;
Fig. 33 shows an example of a loan condition input window E-1 in the embodiment of the present invention;
Fig. 34 shows an example of a payment plan display window E-2 in the embodiment of the present invention;
Fig. 35 shows an example of a negotiation application input window F-1 in the embodiment of the present invention;
Fig. 36 is a schematic diagram showing the overall arrangement of a custom vehicle estimation/ordering system when an estimated price DB 35 are provided to the vehicle manufacturer side in the embodiment of the present invention; and
Fig. 37 is a flow chart showing a calculation process upon calculating an estimated price by the vehicle manufacturer server 1 in the embodiment of the present invention.

### DETAILED DESCRIPTION OF THE PREFERRED EMBODIMENTS

A preferred embodiment in which the present invention is applied to an estimation/ordering system of a custom vehicle (specific vehicle) of an automobile as a representative vehicle will be described in detail hereinafter with reference to the accompanying drawings.

In this embodiment, a custom vehicle is a vehicle for which the user (customer) himself or herself has desirably customized a plurality of predetermined items on the basis of a standard vehicle (base vehicle) that comprises predetermined specifications/equipment using the system of the present invention. That is, the system according to this embodiment is an automobile estimation/ordering system that allows the user (customer) himself or herself to desirably customize a plurality of items set in advance on the basis of a standard vehicle (base vehicle) that comprises predetermined specifications/equipment, and such customized vehicle will be referred to as a custom vehicle.

### [Overall Hardware Arrangement]

Fig. 1 is a schematic diagram showing the overall arrangement of a custom vehicle estimation/ordering system in this embodiment.

Referring to Fig. 1, reference numeral 1 denotes a server computer for a vehicle manufacturer, which manufactures a custom vehicle, which is customized and ordered by the custom vehicle estimation/ordering system according to this embodiment. The server computer 1 mainly serves as an application server for a user terminal 5. This server computer may be equipped in the vehicle manufacturer or may be managed by a third party for that vehicle manufacturer (in this embodiment, this server computer will be referred to as a vehicle manufacturer server hereinafter).

The vehicle manufacturer server 1 can access a manufacturer's suggested retail price database (DB) 31 and a progress management DB 32 by a general scheme as needed during its operation. The manufacturer's suggested retail price DB 31 pre-stores retail prices suggested by the vehicle manufacturer (to be referred to as manufacturer's suggested retail prices hereinafter) for respective specification items as possible choices for a custom vehicle in this system in association with identification information that specifies each specification item (the progress management DB 32 will be described later).

Reference numeral 2 denotes a server computer which determines an estimated price of a given automobile, so as to actually sell that automobile, the specifications of which are determined using the custom vehicle estimation/ordering system according to this embodiment. The server computer 2 may be present in the vehicle manufacturer, may be present in a dealer which sells automobiles of the vehicle manufacturer, or may be managed by a third party for that vehicle manufacturer (in this embodiment, this server computer will be referred to as a dealer server hereinafter).

The dealer server 2 can access the manufacturer's suggested retail price DB 31 by a general scheme as needed during its operation, and can acquire manufacturer's suggested retail prices for respective specification items, which are pre-stored in the manufacturer's suggested retail price DB 31 together with identification information for each specification item, and store them in an estimated price DB 35.

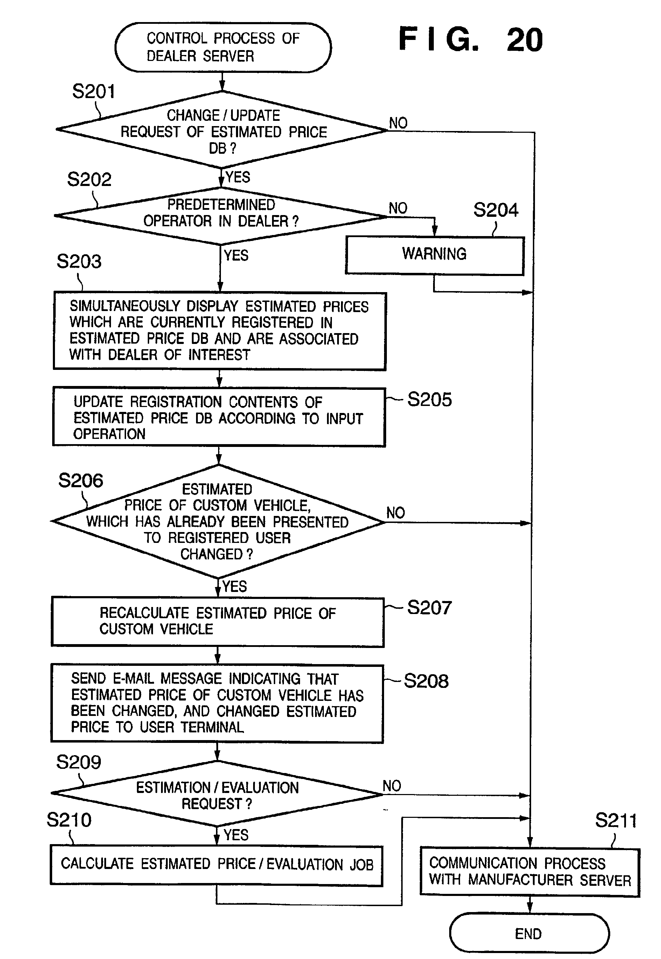

The user of the dealer server 2 sets estimated prices of specification items, which are to be automatically presented to respective users when the dealer sells the specification items, with reference to the manufacturer's suggested retail prices for respective specification items stored in the estimated price DB 35. Note that the operation of the dealer server 2 will be described later with reference to Fig. 20.

Note that it is difficult for the user of the dealer server 2 to actually set estimated prices of a huge number of specification items set by the vehicle manufacturer in the server. Hence, in a preferred embodiment, when discounts (%) for manufacturer's suggested retail prices of a plurality of specification items selected by the user of the dealer server 2 are input, the discounted estimated prices of these specification items are automatically set.

In this embodiment, when a plurality of dealers are present, a given dealer can access the estimated price DB 35 managed by itself, and can refer to and change the registered contents. However, in order to guarantee the autonomy and independency of sales business operations by respective dealers, a given dealer cannot refer to or change the contents of an estimated price DB 35 managed by another dealer using a general security function.

In this embodiment, the vehicle manufacturer server 1 cannot refer to or change the estimated prices of respective specification items, which are set in the estimated price DB 35 equipped in the dealer, so as not to influence sales business operations and estimated prices of the dealer (i.e., to guarantee the independency of sales business operations of the dealer).

Even when the estimated price DB 35 is equipped in the vehicle manufacturer (e.g., in a storage device (database) connected to the vehicle manufacturer server 1), the vehicle manufacturer cannot refer to or change the estimated prices in the estimated price DB 35 so as to guarantee the independency of sales business operations by respective dealers. When the estimated price of a vehicle that has already been customized is calculated by the vehicle manufacturer server 1, the server 1 must be able to only refer to the contents of the estimated price DB 35. Note that a case wherein the estimated price DB 35 is provided to the vehicle manufacturer and the vehicle manufacturer server 1 calculates the estimated price will be described later with reference to Figs. 36 and 37.

More specifically, the dealer purchases articles from the vehicle manufacturer and brand manufacturers of various decoration parts, audio products, and the like, sets sales prices (so-called resale prices) of purchased articles, and sells them to customers. Upon selling, an act of interfering with the sales prices of articles by the manufacturer as a supplier constitutes violation of the principle of free competition on the market. Likewise, upon presenting the estimated price per custom vehicle to a customer, an act of interfering with that estimated price by the vehicle manufacturer and an act of interfering with estimated prices for respective specification items by the vehicle manufacturer, which are stored in the estimated price DB 35, based on which the estimated price per custom vehicle is calculated, constitute violation of the principle of free competition on the market.

Hence, in this embodiment, the estimated prices stored in the estimated price DB 35 (or storage area) prepared for each dealer can be referred to/updated by only the corresponding dealer server 2, and cannot be referred to (browsed)/changed by the vehicle manufacturer server 1 alone. Such arrangement of the estimated price DB 35 is satisfied irrespective of whether the estimated price DB 35 is present either inside or outside the vehicle manufacturer server 1.

When the aforementioned system arrangement is adopted, practice of the system of this embodiment can be started with minimum time and cost without preparing for special hardware and software on the dealer side, and system management after the beginning of operation is easy.

Reference numeral 3 denotes the Internet as a typical communication line. Reference numeral 5 denotes a user terminal such as a personal computer, portable information terminal, portable phone, or the like.

Reference numeral 11 denotes a carrier vehicle that carries custom vehicles delivered from the vehicle manufacturer. The carrier vehicle (including transportations such as ships, railways, and the like in this embodiment) 11 mounts a GPS communication module 12 which detects the current position of the carrier vehicle 11 and externally outputs the detected current position.

Reference numeral 13 denotes an assembly line (production line) in which at least a custom vehicle is manufactured in the vehicle manufacturer. The assembly state of the custom vehicle is photographed by a photographing device 14 such as a video camera, digital camera, or the like arranged near the assembly line 13, and the photographed video or still image is stored in the progress management DB 32 (to be described in detail later).

In the above arrangement, the user terminal 5, the vehicle manufacturer server 1, and the dealer server 2 can make two-way communications according to a general communication scheme via the Internet 3 so as to exchange information that pertains to estimation/ordering of a custom vehicle (to be described later). At this time, when the user terminal 5 is a personal computer, a telephone line or the like is used via a provider (Internet provider) 4. When the user terminal 5 is a portable information terminal or portable phone, a public wireless telephone line or the like is used via a base station 8. Such communication means themselves adopt conventional arrangements, and a detailed description thereof in this embodiment will be omitted.

The current position of the carrier vehicle 11 detected by the GPS communication module 12 is sent along the Internet 3 via a communication satellite 10 and the base station 9, and is then stored in the progress server DB 32 by the vehicle manufacturer server 1. In this case as well, such communication means themselves adopt conventional arrangements, and a detailed description thereof in this embodiment will be omitted.

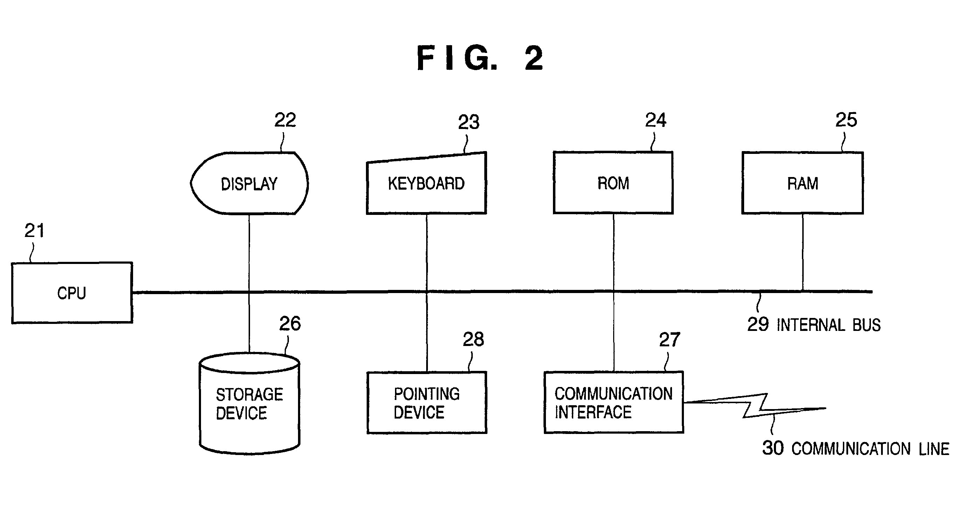

Fig. 2 is a block diagram showing an example of the internal arrangement of the vehicle manufacturer server 1, the dealer server 2, and the user terminal 5 in this embodiment.

Referring to Fig. 2, reference numeral 22 denotes a display such as a liquid crystal display or the like; and 23, a keyboard as input means. Reference numeral 24 denotes a ROM that stores a boot program and the like. Reference numeral 25 denotes a RAM that temporarily stores various processing results. Reference numeral 26 denotes a storage device such as a hard disk drive (HDD) for storing a program and the like. Reference numeral 27 denotes a communication interface, which is used to communicate with an external apparatus via a communication line 30 (the Internet 3 and the like in this embodiment), and comprises a modem or TA when the user terminal 5 is a computer or a wireless transceiver when the user terminal 5 is a portable information terminal or portable phone. Reference numeral 28 denotes a pointing device such as a mouse or the like. These building components are connected via an internal bus 29, and a CPU (central processing unit) 21 controls the overall apparatus in accordance with the program stored in the storage device 26. In this embodiment, the display 22, keyboard 23, and pointing device 28 provide to the user a so-called man-machine interface on each display window (to be described later).

In this embodiment, the vehicle manufacturer server 1, the dealer server 2, and the user terminal 5 have software (software program) of a general communication protocol, which can make Internet communications, an Internet browser function and mailer function that exchange data via the Internet 3 in accordance with that software, and general software that renders the browser.

When the CPU 21 executes such software as needed, the vehicle manufacturer server 1 and the user terminal 5 form a so-called server-client environment while the user terminal 5 establishes connection to (logs into) the vehicle manufacturer server 1 via the Internet 3.

### [Functional System of Custom Vehicle Estimation/ordering System]

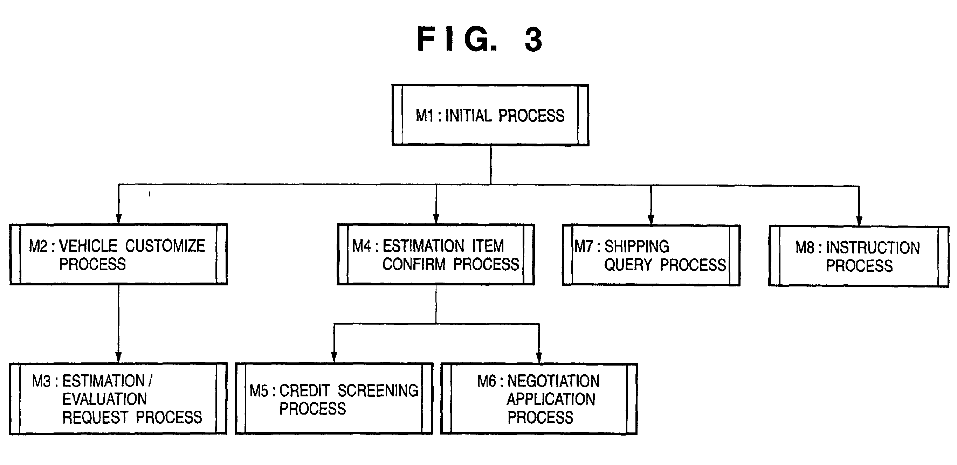

Fig. 3 shows the functional system of process modules executed in the custom vehicle estimation/ordering system according to this embodiment. Each block shown in Fig. 3 is one unit of software, which is executed by the CPU 21 of the vehicle manufacturer server 1 and is roughly classified into respective functions (to be described later). In this embodiment, such processing unit is called a processing module. These processing modules are pre-stored in the storage device 26 or the like of the vehicle manufacturer server 1.

The functions of the respective processing modules will be briefly explained below.
- Initial process (M1): This module displays the top window (home page) of the custom vehicle estimation/ordering system on the user terminal, and allows jumps to other windows for customizing a custom vehicle, sending an estimation request, and so forth.
- Vehicle customize process (Vehicle specifications selecting process) (M2): This module provides to the user terminal 5 an environment that can select a desired custom vehicle by repeating operations for selecting desired specifications from choices prepared in advance for a given vehicle type of automobile that the user (customer) of the user terminal 5 is seeing about purchasing. Furthermore, when the specifications of the custom vehicle are settled, this module allows jump to an estimation/evaluation request process (M3).
- Estimation/evaluation request process (M3): This module provides an environment that allows the user who has settled the specifications of his or her custom vehicle to issue an estimation request of the sales price of that custom vehicle, and to issue an evaluation request of his or her vehicle as a trade-in to the dealer if he or she wants, and sends such request to the designated dealer.
- Estimation item confirm process (M4): When the user of the user terminal 5 is a customer to whom the estimated price of the custom vehicle, the desired specifications of which were settled, has been presented, this module provides information such as the history of estimated prices presented so far, a specification list, and the like to that user, and allows jumps to other windows for credit screening when that user wants to purchase the custom vehicle on installment, for applying for a negotiation to actually order the vehicle, and so forth.
- Credit screening process (M5): When the user (customer) wants to purchase the custom vehicle, the specifications of which have been settled, on installment, this module requests a credit company to make credit screening based on the condition input by the user.
- Negotiation application process (M6): When the user (customer) wants to proceed with a negotiation for actual purchase of the custom vehicle, the specifications of which have been settled, this module sends that message to the dealer.
- Shipping query process (M7): This module informs the user (customer) who ordered the custom vehicle of shipping status until that custom vehicle can be delivered in practice, and the shipping date.
- Instruction process (M8): This module provides instructions about the use method and functions of the custom vehicle estimation/ordering system to the user (customer).

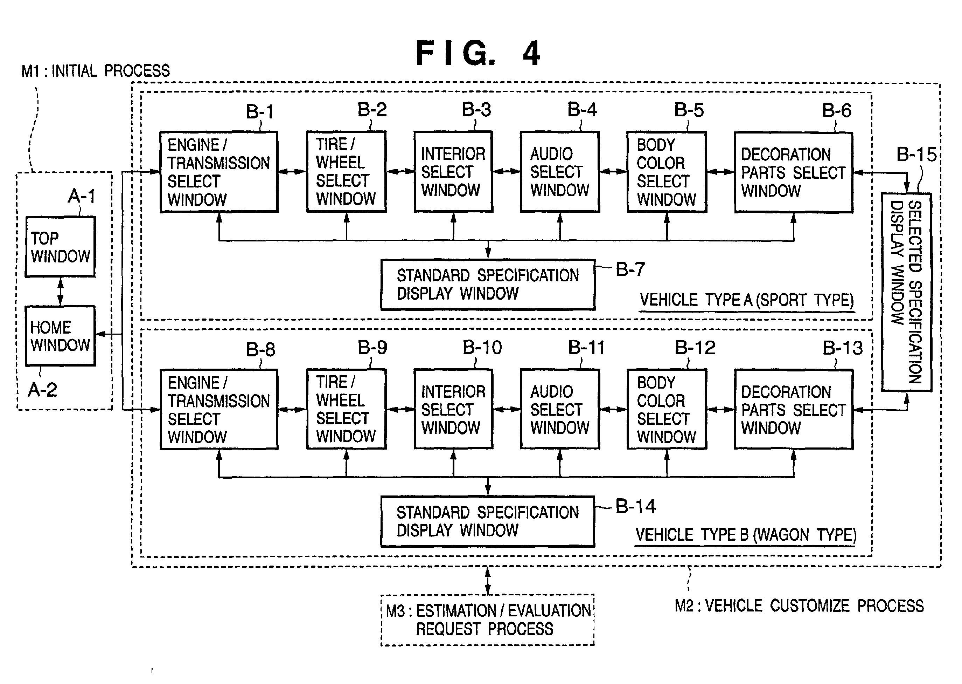

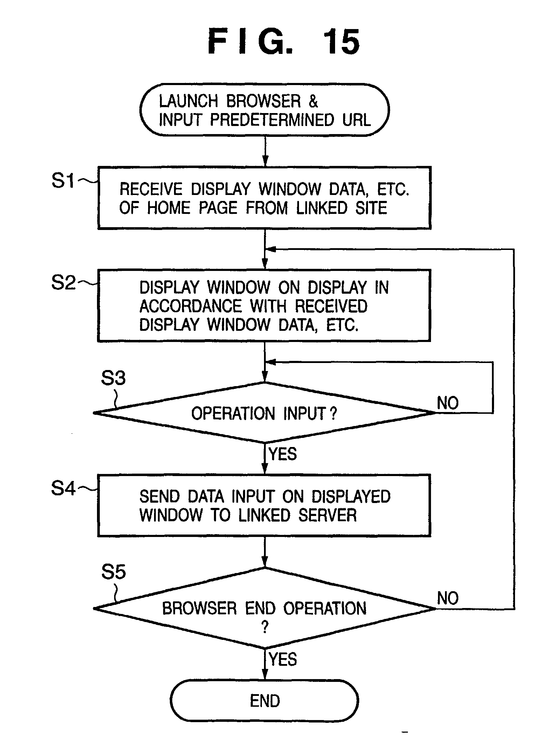

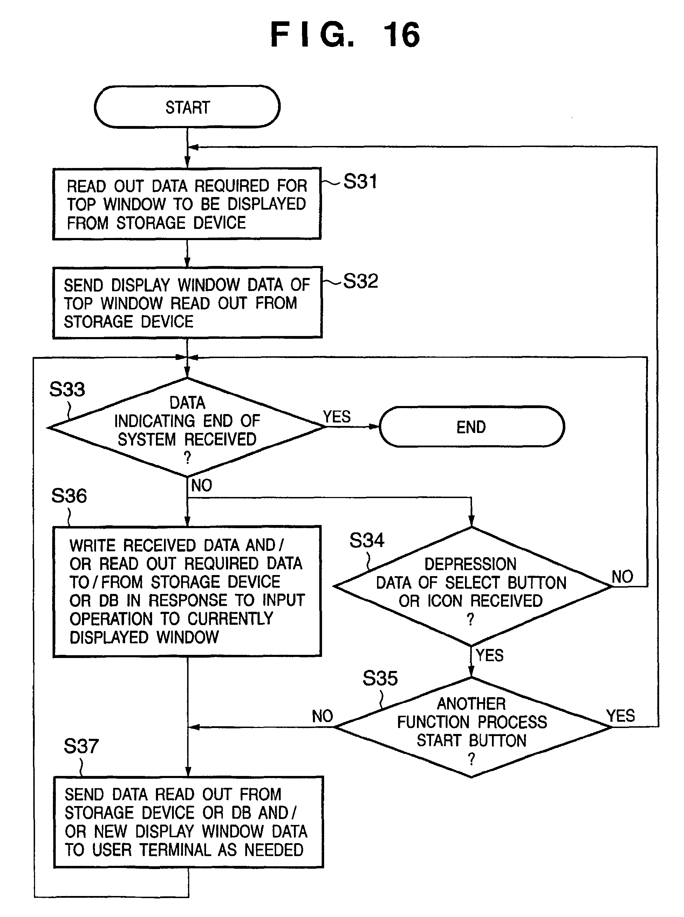

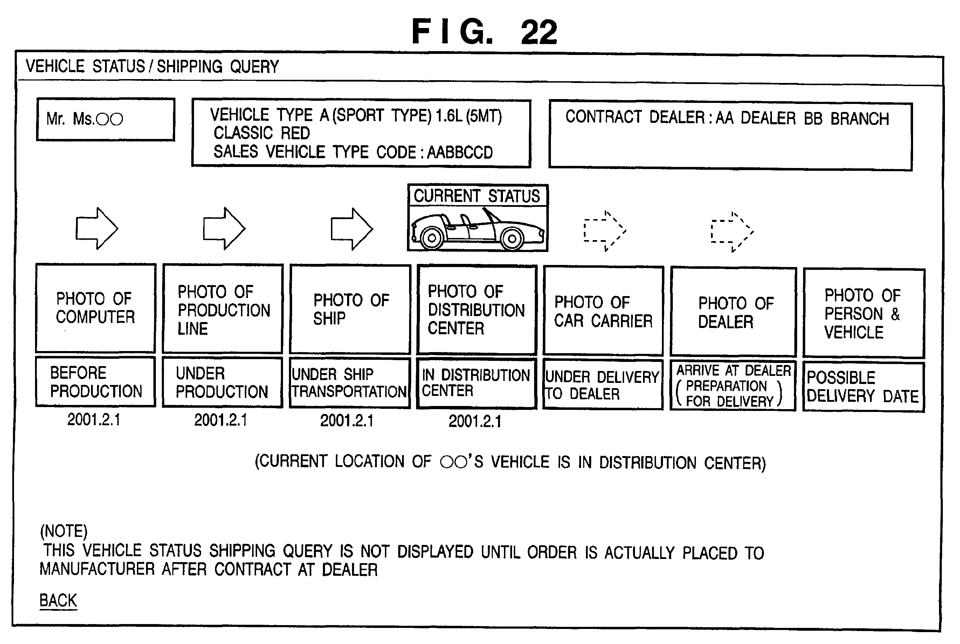

According to the custom vehicle estimation/ordering system described in this embodiment, the aforementioned processing modules (to be described later with reference to the flow charts shown in Figs. 16 to 21) by the vehicle manufacturer server 1, and software of the flow chart shown in Fig. 15 is executed on the user terminal 5 as basic software for displaying various windows on the display 22 of the user terminal 5, thus providing a man-machine interface by means of display of various windows shown in Figs. 4 to 8 (Figs. 22 to 35) on the display 22 of the user terminal 5. Using such man-machine interface, the user (customer) of the user terminal 5 can make customization, estimation, ordering, and the like of a desired custom vehicle.

### [Software Executed by User Terminal 5]

Software which is executed by the CPU 21 of the user terminal 5 to display various windows will be described below.

Fig. 15 is a flow chart of software executed by the user terminal 5 that receives services of the vehicle manufacturer server 1 in this embodiment.

The storage device 26 of the user terminal 5 pre-stores a browser program, as described above. The user launches the browser program in a predetermined procedure (i.e., loads the browser program in the storage device 26 onto the RAM 25 and executes the loaded program by the CPU 21) so as to link his or her terminal as a client with the custom vehicle estimation/ordering system that the CPU 21 of the vehicle manufacturer server 1 can execute, and inputs a predetermined URL in a predetermined area of the launched browser. After link to the custom vehicle estimation/ordering system is established via the Internet 3, the CPU 21 of the user terminal 5 starts processes in step S1 and subsequent steps.
Step S1 in Fig. 15: Display window data and the like of a home page (HP) are received from a link destination site (vehicle manufacturer server 1) to the RAM 25 via the communication interface 27. This embodiment adopts a general HTML (Hyper Text Markup Language) as an example of the Web page description language.
Step S2: A window is displayed on the display 22 in accordance with the display window data, data to be embedded in that display window, and the like, which are received from the vehicle manufacturer server 1.
Step S3: It is detected if key input of numerical values and the like from the keyboard 23 and/or pointing operation by the pointing device 28 are/is made.
Step S4: If YES (input operation is detected) in step S3, data of a predetermined input item and/or data according to the pointing operation with respect to the window displayed on the display 22 are/is sent to the vehicle manufacturer server 1 via the communication interface 27.
Step S5: It is checked if predetermined input operation indicating an end instruction of the browser is made. If NO (no end instruction is detected) in step S5, the flow returns to step S2. On the other hand, if YES (end instruction is detected) in step S5, the browser program is ended, and the area of the RAM 25 where that program resided is released.

### [Software Executed by Vehicle Manufacturer Server 1]

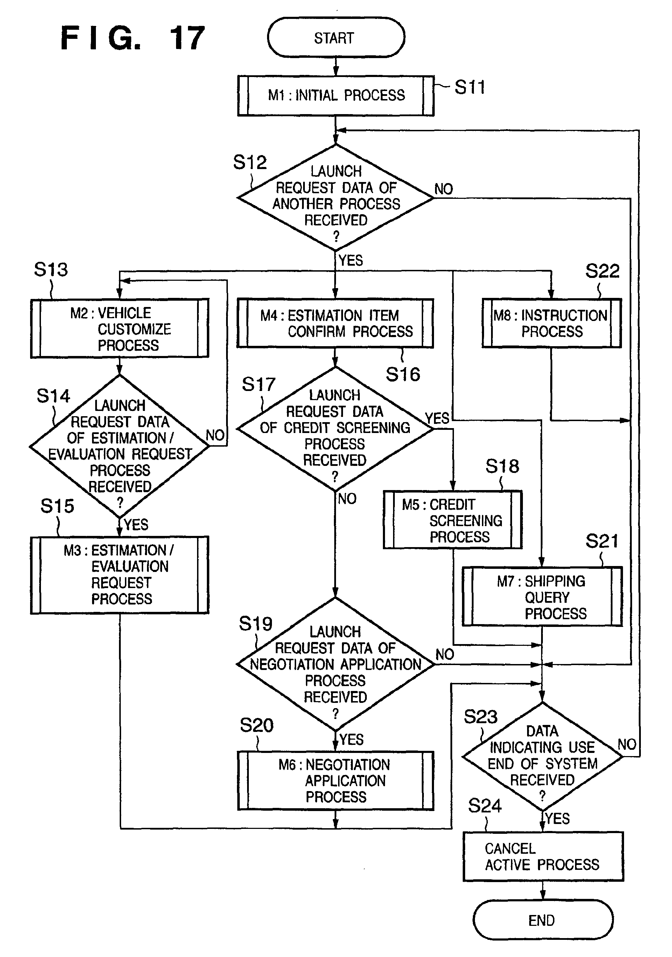

Software to be executed by the CPU 21 of the vehicle manufacturer server 1 will be explained below. In the following description, a window display process common to the aforementioned processing modules will be explained first with reference to the flow chart shown in Fig. 16, and state transition among the respective processing modules will then be explained with reference to the flow chart shown in Fig. 17. Furthermore, transition of the display windows in the respective processing modules will be explained with reference to Figs. 4 to 8.

### (1) Window display process common to respective processing modules

Fig. 16 is a flow chart showing a window display process common to the respective processing modules executed by the vehicle manufacturer server 1 in this embodiment. This process is done to display a window according to user's input operation on the display 22 of the user terminal 5, which has logged into the vehicle manufacturer server 1. This process is started by the CPU 21 of the vehicle manufacturer server 1 in response to a change in function to be used by predetermined operation of the user at the user terminal 5 on each display window (to be described later).

Step S31 in Fig. 16: Data of items required for a top window (i.e., a top window corresponding to a function designated by predetermined operation) to be displayed on the user terminal 5 are read out from the storage device 26 of the vehicle manufacturer server 1.

Step S32: Display window data of the top window to be displayed and the data read out from the storage device 26 in step S31 are sent to the user terminal 5, which has logged into the server 1, via the Internet 3. At this time, the CPU 21 of the user terminal 5 which received these display window data and the like interprets the received display window data and the like by the currently running browser function, and displays the top window on the display 22 in accordance with the interpretation result.

Step S33: It is detected if data indicating the end of use of this system is received. If YES (received) in step S33, the processing is canceled.

Step S34: If NO (not received) in step S33, it is detected if data indicating that a software button (to be simply referred to as a button hereinafter) (including an icon) has been pressed (clicked) on the window currently displayed on the user terminal is received via the Internet 3. If NO (not received) in step S34, the flow returns to step S33.

Step S35: If YES (received) in step S34, it is checked if the clicked button is a one for selecting a function different from that available for the user on the currently displayed window. If YES (indicating a different function) in step S35, the flow returns to step S31. On the other hand, if NO (not a different function), the flow advances to step S357.

Step S36: If NO (not received) in step S33, data received via the Internet 3 is written in (also to update the stored data) and/or new data is read out from the storage device 26 or progress management DB 32 of the vehicle manufacturer server 1 in response to user's operation input on the window currently displayed on the user terminal 5.

Step S37: The data read out in step S36 and display window data indicating a window used to display that data are sent to the user terminal 5 that has logged in via the Internet 3 as needed, and the flow returns to step S33. At this time, the CPU 21 of the user terminal 5, which received these display window data and the like as in step S32, displays a window depending from the top window displayed so far, display a new window on a portion of the currently displayed window, and so forth.

### (2) State transition among respective processing modules

Fig. 17 is a flow chart showing an outline of the overall process executed by the vehicle manufacturer server 1 in this embodiment.

The processing modules M1 to M8 executed by the vehicle manufacturer server 1 have a function of displaying various windows (to be described later) on the display 22 of the user terminal 5, and implementing input operations on the displayed windows, and transition of the display windows in these processing modules will be described later with reference to Figs. 4 to 8.

Steps S11 and S12 in Fig. 17: When the user terminal 5 has been linked to the site of this system via the Internet 3, the initial process (M1) is executed (step S11), and it is checked if launch request data of another process is received from the user terminal 5 during the initial process (M1) (step S12). If YES in step S12, the flow advances to step S16, S21, or S22 depending on the data received; otherwise, the flow advances to step S23.

Steps S13 to S15: The vehicle customize process (M2) is executed (step S13), and it is checked if launch request data of the estimation/evaluation request process (M3) is received from the user terminal 5 during the vehicle customize process (M2) (step S14). If YES in step S14, the estimation/evaluation request process (M3) is executed (step S15).

Steps S16 to S20: The estimation item confirm process (M4) is executed (step S16), and it is checked if launch request data of the credit screening process (M5) or the negotiation application process (M6) is received from the user terminal 5 during the estimation item confirm process (M4) (step S17 or S19). If YES in step S17 or S19, the credit screening process (M5) or the negotiation application process (M6) is executed depending on the received data (step S18 or S20).

Step S22: The instruction process (M8) is executed.

Steps S23 and S24: It is checked if data indicating the end of use of this system is received from the user terminal 5 during execution of the aforementioned processing module (step S23). If YES in step S23, the processing of the processing module, which is running, is canceled (step S24); otherwise, the flow returns to step S12.

### (3) Transition of display windows in respective processing modules

Transition of the display windows in the eight different processing modules which have been briefly explained above will be described below with reference to Figs. 4 to 8. The relationship of state transition among the processing modules indicated by broken line blocks in Figs. 4 to 8 follow the functional system mentioned above with reference to Fig. 3.

### <Initial Process (M1), Vehicle Customize Process (M2)>

Fig. 4 shows transition of the display windows in the initial process (M1) and vehicle customize process (M2).

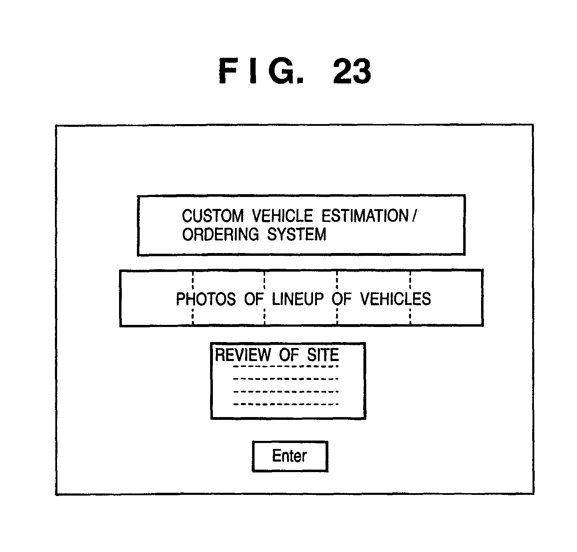

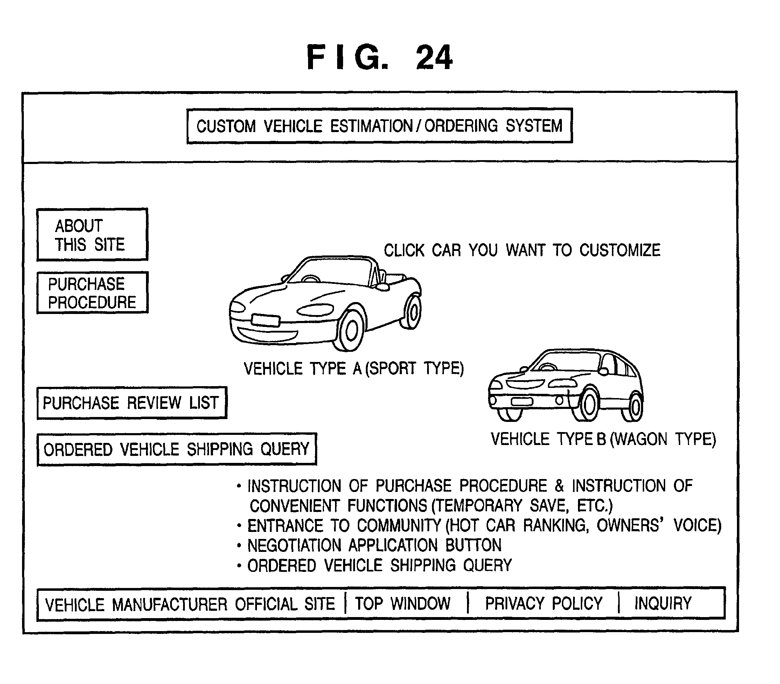

Referring to Fig. 4, the initial process (M1) displays a top window A-1 (Fig. 23) as a home page window of this system. The top window A-1 exemplified in Fig. 23 includes an "Enter" button to be operated by the user (i.e., the user who has been linked to the vehicle manufacturer server 1 via the Internet 3) who wants to use this system that allows customization, estimation, ordering, and the like of a custom vehicle. If the user has operated this "Enter" button, the initial process (M1) displays a home window A-2 (Fig. 24) of this system on the user terminal 5.

Fig. 24 shows an example of the home window A-2 displayed by the initial process (M1).

The display window shown in Fig. 24 includes a plurality of operation buttons. If the user has operated an operation button "about this site" or "purchase procedure", a predetermined instruction window pops up on the user terminal 5 by the function of the instruction process (M8) (to be described later). On the other hand, if the user has operated an operation button "purchase review list", the function of the estimation item confirm process (M4) (to be described later) is provided to the user terminal 5. If the user has operated an operation button "ordered vehicle shipping query", the function of the shipping query process (M7) is provided to the user terminal 5.

If the user has clicked a photo of vehicle type A as sport type or vehicle type B as wagon type on the home window A-2, the function of the vehicle customize process (M2) is provided to the user terminal 5.

In this embodiment, the vehicle customize process (M2) allows the user to customize vehicles of two different vehicle types, i.e., vehicle type A (sport type) and vehicle type B (wagon type) for the sake of simplicity.

When the user has selected the desired vehicle type on the home window A-2, the user himself or herself can perform processes from desired customization of a plurality of predetermined items to settlement of a customized vehicle on the basis of a standard vehicle (base vehicle) of the selected vehicle type. In other words, various specifications (equipment) set in advance in the system as a standard vehicle are replaced by other specifications (equipment) or new equipment (optional equipment) which is not set for the standard vehicle is added by user's customize operations.

Fig. 25 shows an example of the format of a vehicle customize window (B-1 to B15) displayed by the vehicle customize process (M2). The basic format of this window is basically common to an engine/transmission select window (B-1 and B-8), tire/wheel select window (B-2 and B-9), interior select window (B-3 and B-10), audio select window (B-4 and B-11), body color select window (B-5 and B-12), and decoration parts select window (B-6 and B-13).

Since details of the arrangements of these vehicle customize windows are not essential to the present specification, a detailed description and illustration thereof will be omitted, but the functions of the respective windows will be briefly explained.

Engine/transmission select window (B-1, B-8): On this window, the user of the user terminal 5 can select a desired combination of engine and transmission from a plurality of different combinations of engines and transmissions that can be mounted for the desired vehicle type previously selected on the home window A-2.

Tire/wheel select window (B-2, B-9): This window is displayed in correspondence with the combination of engine and transmission previously selected on the engine/transmission select window (B-1, B-8). The user of the user terminal 5 can select a desired combination from a plurality of different combinations of tires and wheels presented as choices on this window. Furthermore, the user can also select optional equipment such as an anti-lock brake system (ABS), torque sensing (TORSEN) LSD, and the like depending on the vehicle type of his or her choice.

Interior select window (B-3, B-10): On this window, the user of the user terminal 5 can select a desired interior from a plurality of different interiors for the desired vehicle type selected on the home window A-2.

Audio select window (B-4, B-11): On this window, the user of the user terminal 5 can select a desired one of a plurality of different audio systems available for the desired vehicle type selected on the home window A-2.

Body color select window (B-5, B-12): On this window, the user of the user terminal 5 can select a desired one of a plurality of different body colors available for the desired vehicle type selected on the home window A-2.

Decoration parts select window (B-6, B-13): On this window, the user of the user terminal 5 can select desired ones of a plurality of different decoration parts available for the desired vehicle type selected on the home window A-2.

Note that decoration parts as so-called dealer options generally have physical limitations (e.g., a shape, mounting space, and the like) on an automobile assembled in the vehicle manufacturer. Hence, upon selecting decoration parts as such dealer options in this system, parts to be displayed as choices on the decoration parts select window (B-6, B-13) must be limited in correspondence with the specification items that have already been selected on the previous windows.

On the upper half region of these vehicle customize windows, photos of the vehicle type selected on the home window A-2 and its interior, "ZOOM" buttons which can display these photos in an enlarged scale, an "article information" button that can display various kinds of information associated with the vehicle type, a "standard vehicle information" button that can display a standard specification display window B-7 or B-14 which includes the specifications, data, and the like associated with a standard vehicle of that vehicle type, a manufacturer's suggested retail price of a vehicle unit (per custom vehicle) according to the specifications selected by the user, an "account" button that can display the account of that manufacturer's suggested retail price, as shown in Fig. 26, and details of the specification items that have already selected by the user.

In this embodiment, since the manufacturer's suggested retail price can be displayed for each vehicle or specification item, the guideline of the purchase price upon selecting a custom vehicle with desired specifications can be presented to the user, thus improving the convenience.

Fig. 26 shows an example of the account window displayed upon operation of the "account" button shown in Fig. 25, and this window displays the manufacturer's suggested retail price of a vehicle unit, the selected specification items based on which the former retail price is calculated, and manufacturer's suggested retail prices of those items.

User's customize operations of a custom vehicle are restricted to select specification items in the order of select windows B-1 to B-6 for vehicle type A or B-8 to B-13 for vehicle type B, and the lower half region of the vehicle customize window displays the select processes (steps) corresponding to the windows B-1 to B-6 or B-8 to B-13 in the form of, e.g., a plurality of stacked folders.

Fig. 25 exemplifies a state wherein the folder of the third step is selected, and the selected folder (active state) displays possible user's choices of specification items in that step together with images such as photos and the like, the price differences from items of the standard vehicle, names (model numbers), and the like. When the user selects a desired one from the displayed choices (specifications), the selected specification information is stored in the vehicle manufacturer server 1 together with identification information (ID) that specifies the user.

At this time, the vehicle manufacturer server 1 acquires the manufacturer's suggested retail price of that specification item by referring to the manufacturer's suggested retail price DB 31 using the selected specification item information as a key, and adds the acquired manufacturer's suggested retail price of the specification item to those already selected in the steps executed so far.

In this way, the manufacturer's suggested retail price of a vehicle unit displayed at the upper right position of Fig. 25 is updated, and if the "account" button is selected later, the account display window shown in Fig. 26 displays information added with columns of the specification item selected in the current step and its manufacturer's suggested retail price.

In a preferred embodiment, the image of a custom vehicle, customization of which is underway, may be updated to reflect the selected specification items (e.g., body color, wheel, and the like) as the user selects desired specification items in respective steps.

More preferably, the display color of the folders of the selected steps (steps 1 and 2 in Fig. 25) may be changed to be different from that of the folders of the steps to be selected (steps 3 to N in Fig. 25).

Furthermore, a "HOME" button that allows jump to the home window A-2 (Fig. 24), and "BACK" and "NEXT" buttons that can display the previous and next display windows are displayed on the lower half region of the vehicle customize window.

Choices available for the user in the respective steps of the vehicle customize process (M2) have predetermined limitations. Basically, the first step of customization of a custom vehicle is restricted to select the specification of a backbone that determines the drive performance of that vehicle, and the subsequent steps are restricted to select other items to have the specification selected in the first step as top priority.

That is, in this embodiment, since selection of drive system components (i.e., corresponding to the engine/transmission select window B-1 or B-8) as a backbone of an automobile that can be manufactured by the vehicle manufacturer as the first step, and selection of wheel peripheral components (i.e., corresponding to the tire/wheel select window B-2 or B-9 of the second step) which are registered in advance in correspondence with the selected drive system components are made in turn, the specifications of the mechanism of the automobile, which directly influence the travel performance and drive performance, are determined prior to customization of the interior, audio, exterior, and the like, which do not directly influence the travel performance of the automobile.

In the vehicle customize process (M2), when the user has selected all specification items required for one custom vehicle using these windows, identification information (specification number) that specifies the vehicle specification of the custom vehicle of the user's choice is selected.

Fig. 9 is a system chart showing limitations on choices which are referred to upon selecting the mechanism of vehicle type A (sport type) in the vehicle customize process (M2). In order to select desired specifications for the mechanism of vehicle type A, choices of respective specification items, i.e., engine/transmission, suspension/tire·wheel, anti-lock brake system (ABS), and TORSEN LSD are set in turn to the right on the basis of a standard vehicle as base grade and base model shown on the left side in Fig. 9.

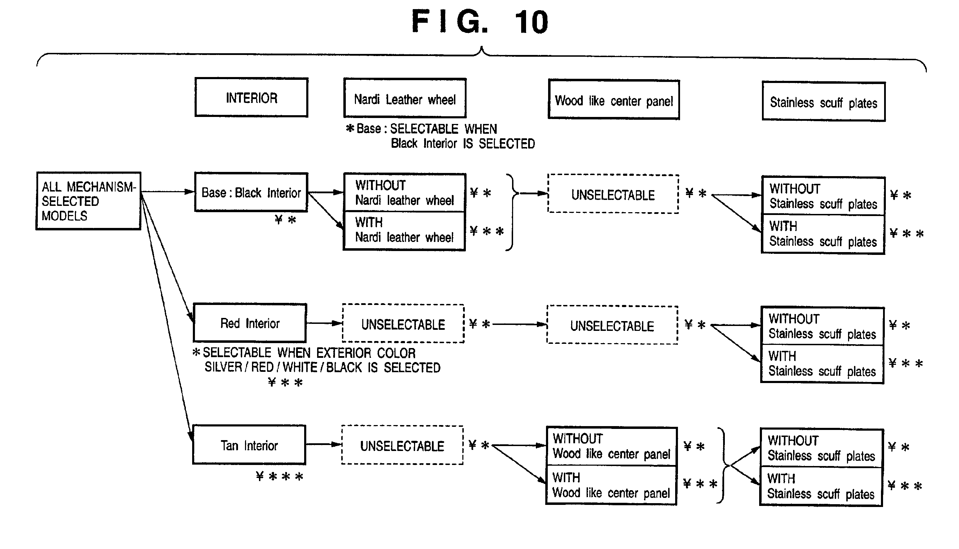

Fig. 10 is a system chart showing limitations on choices which are referred to upon selecting the interior of vehicle type A (sport type) in the vehicle customize process (M2), and is adopted for vehicle type A for which one of possible choices of mechanisms has been determined on the basis of the limitations on the choices shown in Fig. 9. In the example shown in Fig. 10, choices of specification items of color, specifications, and the like of the interior are set in turn to the right, but these limitations are set in terms of design and price unlike in the mechanism.

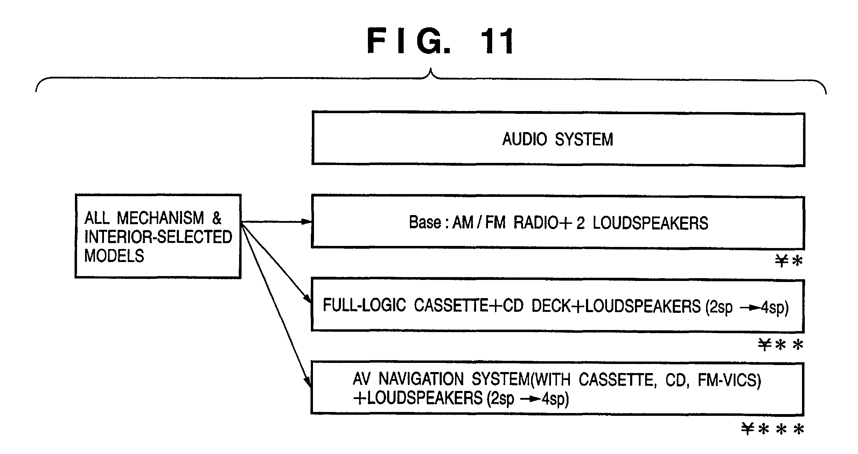

Fig. 11 is a system chart showing limitations on choices which are referred to upon selecting the audio system of vehicle type A (sport type) in the vehicle customize process (M2). In the example shown in Fig. 11, all audio systems are selectable for all vehicles of vehicle type A, the mechanism and interior of which have been determined based on the limitations on choices shown in Figs. 9 and 10.

The limitation information of choices shown in Figs. 9 to 11 is pre-set in, e.g., the storage device 26 or the like of the vehicle manufacturer server 1 as information to be referred to as choices which are to be displayed on the window corresponding to the next step when the user has selected give choices in respective steps of the aforementioned vehicle customize windows. Upon selecting all specification items shown in Figs. 9 to 11, identification information (vehicle type ID) for the custom vehicle of the user is selected. The vehicle type ID selected at that time belongs to the homologation that the vehicle manufacturer has acquired from a public organization for vehicle type A.

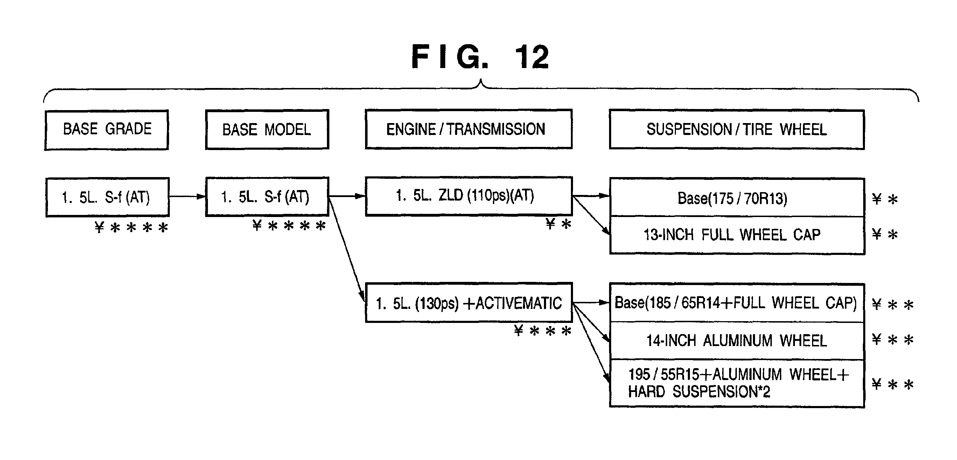

Fig. 12 is a system chart showing limitations on choices which are referred to upon selecting the mechanism of vehicle type B (wagon type) in the vehicle customize process (M2). Fig. 12 is basically the same as the system chart of vehicle type A (sport type) described above with reference to Fig. 9, but since vehicle type B is wagon type, specification items simpler than those of vehicle type A (sport type) are set.

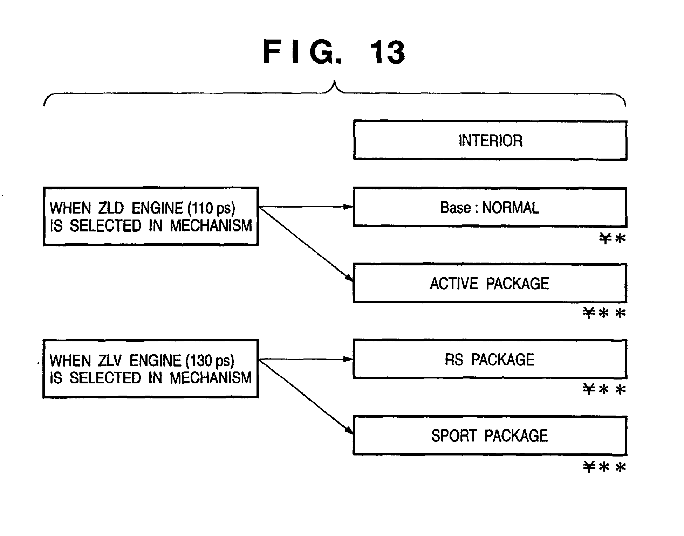

Fig. 13 is a system chart showing limitations on choices which are referred to upon selecting the interior (including an audio system in this case) of vehicle type B (wagon type) in the vehicle customize process (M2). Fig. 13 is basically the same as the system chart of vehicle type A (sport type) described above with reference to Fig. 10. In the example shown in Fig. 13, simpler specification items are set in consideration of price in correspondence with the type of engine previously selected based on the limitations in Fig. 12.

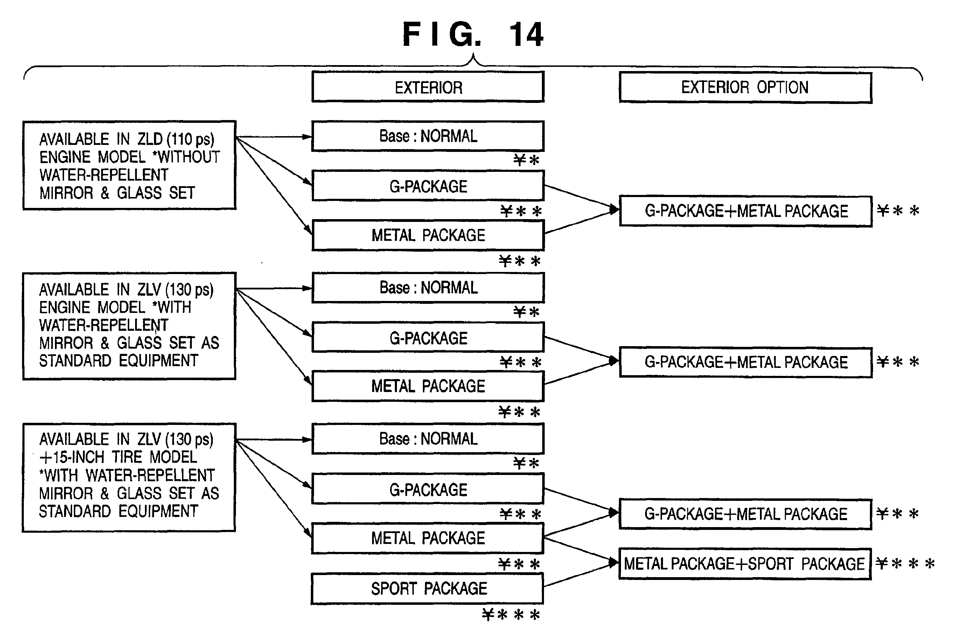

Fig. 14 is a system chart showing limitations on choices which are referred to upon selecting the exterior of vehicle type B (wagon type) in the vehicle customize process (M2). In the example shown in Fig. 14, simpler specification items are set in consideration of price in correspondence with the type of engine previously selected based on the limitations in Fig. 12.

The limitation information of choices shown in Figs. 12 to 14 is pre-set in, e.g., the storage device 26 or the like of the vehicle manufacturer server 1 as information to be referred to as choices which are to be displayed on the window corresponding to the next step when the user has selected give choices in respective steps of the aforementioned vehicle customize windows. Upon selecting all specification items shown in Figs. 12 to 14, identification information (vehicle type ID) for the custom vehicle of the user is selected. The vehicle type ID selected at that time belongs to the homologation that the vehicle manufacturer have acquired from a public organization for vehicle type B.

It is expected that users (customers) who are willing to purchase vehicles desirably customized using the estimation/ordering system described in this embodiment like driving itself compared to normal drivers who drive vehicles simply as transportation means, and it is easy to expect that such users take a greater interest in the drive system, tires/wheels, and the like upon purchasing vehicles. If the aforementioned limitations on choices are adopted, such users' requirements can be efficiently and satisfactorily met.

In general, homologation must be acquired from a public organization in association with the objective vehicle type and specifications of an automobile prior to mass production and sales, and is determined based on the drive performance that greatly pertains to safe travel of an automobile. When the aforementioned limitations are adopted, the finally determined vehicle type ID can efficiently and reliably fall within the range of homologation acquired in advance from the public organization for a plurality of types of custom vehicles which can be selected by this system.

Therefore, upon making selections in turn on the vehicle customize window under the aforementioned limitations, the user (customer) can easily customize a vehicle of the desired vehicle type selected on the home window A-2 (Fig. 24) by his or her own interactive game-like operations, and can experience as if the engineer of an automobile tuning shop tuned an automobile.

Upon completion of selection of all specification items required for the specifications of a custom vehicle in the vehicle customize process (M2), a selected specification display window B-15 shown in Fig. 27 is displayed.

Fig. 27 shows an example of the selected specification display window B-15 displayed by the vehicle customize process (M2). The selected specification display window B-15 displays, for example, photo images of the exterior and interior of the customized vehicle, selected specification items and their prices, the price of a standard vehicle, and the like.

Upon operation of a "dealer estimation demand" button on the selected specification display window B-15 to demand an estimation of an actual sales price or to demand the dealer to estimate a sales price, the selected specification items of the custom vehicle are settled, and the control can transit to the estimation/evaluation request process (M3) (to be described later). On the other hand, if the user has operated a "back" button, the control returns in turn to the vehicle customize windows corresponding to the aforementioned steps to change the specification items. That is, alternative choices cannot be made unless the control returns to previous choices.

### <Estimation/evaluation Request Process (M3)>

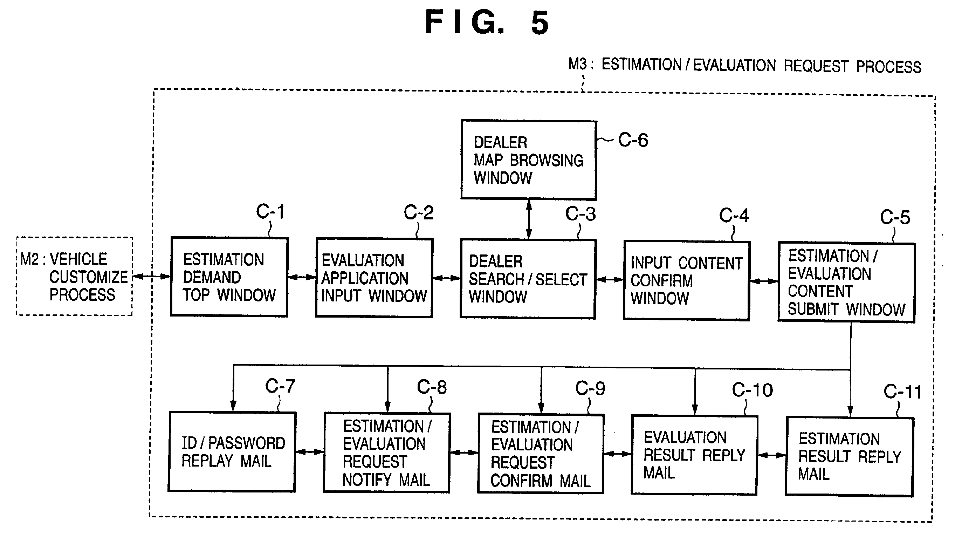

Fig. 5 shows transition of display windows in the estimation/evaluation request process (M3), and an e-mail sending function upon issuing an estimation/evaluation request. This process is launched in response to operation of the "dealer estimation demand" button after the custom vehicle has been customized in the vehicle customize process (M2). The control can return from the estimation/evaluation request process (M3) to the vehicle customize process (M2) in response to user's operation.

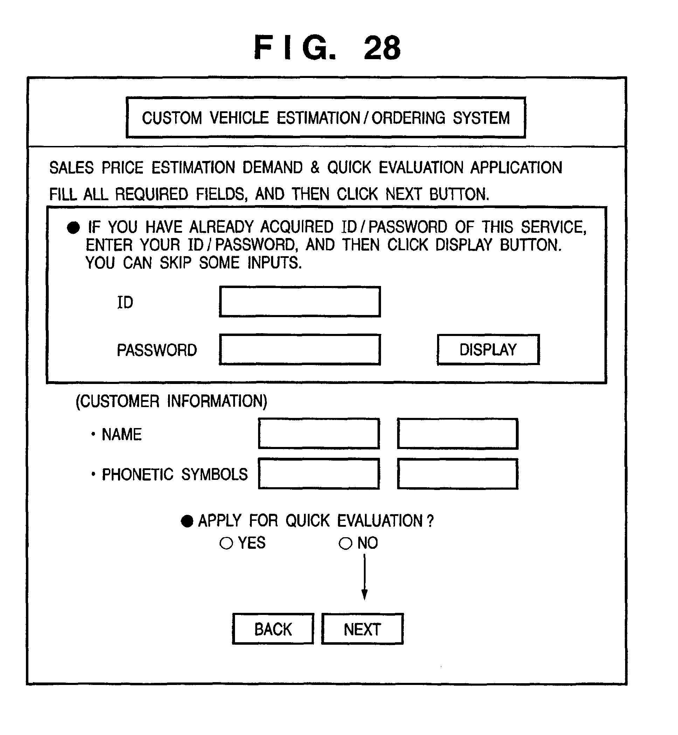

As shown in Fig. 5, as transition of display windows in the estimation/evaluation request process (M3), an estimation demand top window C-1 (Fig. 28), evaluation application input window C-2 (Fig. 29), dealer search/select window C-3, input content confirm window C-4, estimation/evaluation content submit window C-5, and dealer map browsing window C-6 can be displayed on the user terminal 5.

Estimation demand top window C-1 (Fig. 28) : On this window, the user of the user terminal 5 inputs items associated with himself or herself (name, and the like, or the user ID and password if they have already been issued), thus applying (requesting) the dealer for an estimation of the price of the custom vehicle previously settled in the vehicle customized process (M2) or an evaluation for a trade-in. That is, after the information associated with the user is input on this display window, if a radio button "YES" that pertains to evaluation application is selected, the evaluation application input window C-2 is displayed; if "NO" is selected, the dealer search/select window C-3 is displayed.

Evaluation application input window C-2 (Fig. 29): On this window, the user of the user terminal 5 inputs predetermined specification items (automobile manufacturer name, vehicle name, displacement, total mileage, and the like) of an automobile to be traded (trade-in), and selects a "next" button to display the dealer search/select window C-3.

Dealer search/select window C-3 (not shown): On this window, the user of the user terminal 5 can select a dealer that he or she wants to request to estimate the custom vehicle or to evaluate a trade-in by himself or herself. As a select method, a method of automatically presenting a nearby dealer on the basis of the user's address previously input on the estimation demand top window C-1 or the like, a method of making the user select a desired dealer from those displayed in a list, and the like may be used. In any case, it is convenient for the user if the dealer map browsing window C-6 pops up from the dealer search/select window C-3.

When the dealer that the user requests to estimate the custom vehicle or to evaluate a trade-in is selected on the dealer search/select window C-3, the input content confirm window C-4 is displayed on the user terminal 5 of the user.

Input content confirm window C-4 (not shown): This window displays in a list the contents of the respective specification items (including manufacturer's suggested retail prices) of the custom vehicle previously settled in the vehicle customize process (M2), the contents of items input by the user himself or herself in the evaluation application input window C-2 if the user selected evaluation of a trade-in, information associated with the dealer selected on the dealer search/select window C-3 to request such estimation/evaluation, and the like. The user of the user terminal 5 confirms the contents of the information displayed on the input window content confirm window C-4, and then actually submits an estimation/evaluation request by predetermined operation, thus displaying the estimation/evaluation content submit window C-5 on the user terminal 5.

Estimation/evaluation content submit window C-5 (not shown): This window displays information indicating that the estimation/evaluation request was submitted and accepted by the vehicle manufacturer server 1, and the user will receive an e-mail message that pertains to the request contents from the dealer selected by himself or herself.

The estimation/evaluation request process (M3) includes a function of sending/receiving e-mail messages in response to the estimation/evaluation request submitted from the user terminal 5 on the estimation/evaluation content submit window C-5.

ID/password reply mail C-7: If the user submitted the first estimation request, an e-mail message that contains the ID/password is sent to the mail address previously input by the user.

Estimation/evaluation request notify mail C-8: The vehicle manufacturer server 1 sends an e-mail message that informs the dealer server 2 of an objective dealer that the user requested to estimate the custom vehicle and/or to evaluate a trade-in. This e-mail message contains information (address, name, mail address, and the like) which is input on, e.g., the estimation demand top window C-1 and can specify the user, identification information (specification number) of the vehicle specifications set in the vehicle customize process (M2), the specification items of the trade-in input on the evaluation application input window C-2, and the like.

Estimation/evaluation request confirmation mail C-9: The dealer that received the estimation request of the custom vehicle and/or the evaluation request of the trade-in from the user sends an e-mail message to the mail address previously input by the user so as to confirm if the user sent the estimation/evaluation request.

Evaluation result reply mail C-10: The dealer that received the evaluation request of the trade-in from the user sends an e-mail message which replies the evaluation result to the mail address previously input by the user.

Estimation result reply mail C-11: The dealer that received the estimation request of the trade-in from the user sends an e-mail message which replies the estimation result to the mail address previously input by the user.

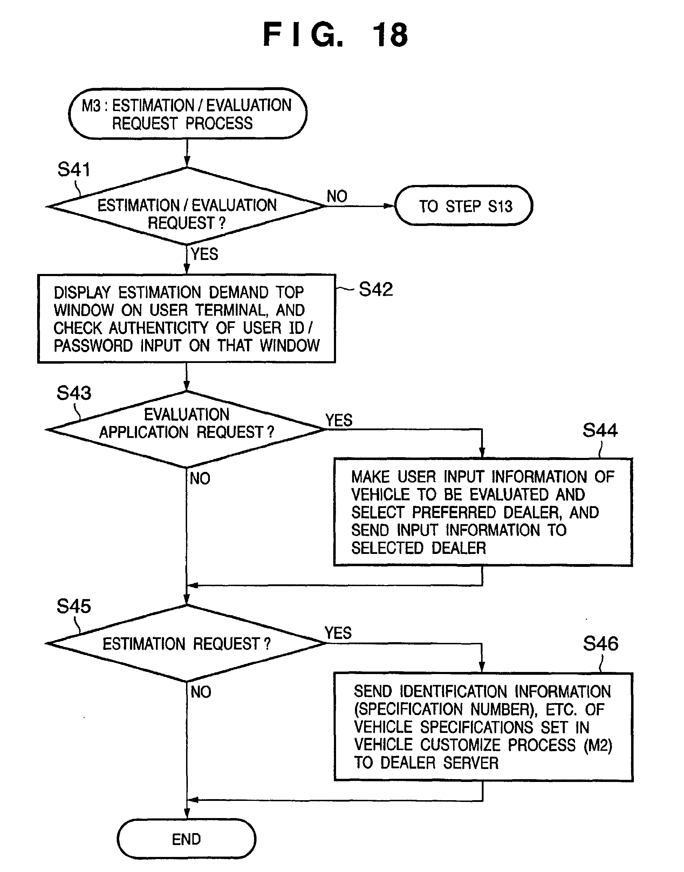

Fig. 18 is a flow chart showing the estimation/evaluation request process (M1) executed by the vehicle manufacturer server 1.

Steps S41 and S42 in Fig. 18: It is checked if the estimation/evaluation request is issued during the vehicle customize process (M2) (step S41: corresponding to step S17 (Fig. 17)). If NO in step S41, the flow returns to step S13 (Fig. 17); otherwise, the estimation demand top window C-1 (Fig. 28) is displayed on the user terminal 5, and authenticity of the user ID and password input to that window is checked (step S42).

Steps S43 and S44: It is checked if the evaluation request is issued (step S43). If NO in step S43, the flow advances to step S45; otherwise, the evaluation application input window C-2 (Fig. 29) is displayed on the user terminal 5 to prompt the user to input information of a vehicle as a trade-in to be evaluated, the dealer search/select window C-3 is then displayed on the user terminal 5 to make the user select a dealer, and the input information is sent to the selected dealer via the estimation/evaluation request notify mail C-8 (step S44).

Steps S45 and S46: It is checked if the estimation request of the custom vehicle is issued (step S45). If NO in step S45, the processing ends; otherwise, the identification information (specification number) of the vehicle specifications set in the vehicle customize process (M2) is sent to the dealer sever (S46).

### <Estimation Item Confirm Process (M4)>

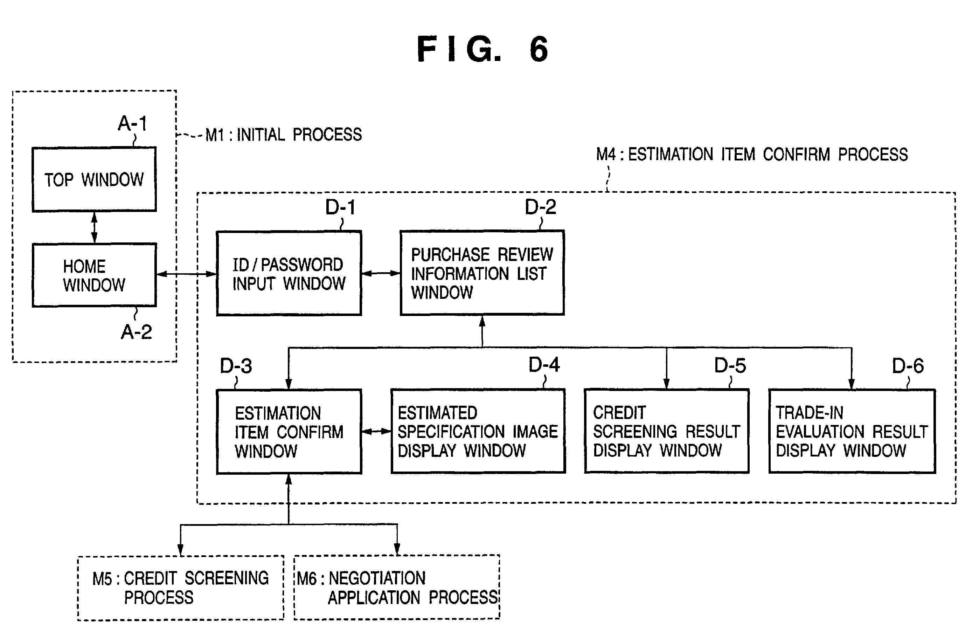

Fig. 6 shows transition of display windows in the estimation item confirm process (M4). This process is launched upon operation of the "purchase review list" operation button on the home window A-2 displayed by the initial process (M1). The control can transit from the estimation item confirm process (M4) to the initial process (M1), credit screening process (M5), or negotiation application process (M6) in response to user's operation.

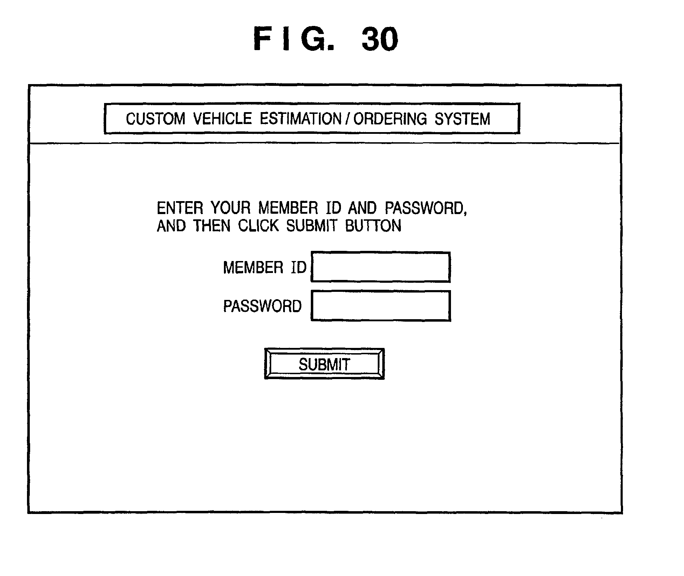

As shown in Fig. 6, as transition of display windows in the estimation item confirm process (M4), an ID/password input window D-1 (Fig. 30), purchase review information list window D-2 (Fig. 31), estimation item confirm window D-3 (Fig. 32), estimated specification image display window D-4, credit screening result display window D-5, and trade-in evaluation result display window D-6 can be displayed on the user terminal 5.

ID/password input window D-1 (Fig. 30): On this window, the user of the user terminal 5 inputs the user ID (member ID) and password previously issued to that user, and operates "submit" button to log into this system (vehicle manufacturer server 1). Upon completion of the login process, the purchase review information list window D-2 (Fig. 31) is displayed on the user terminal.

Purchase review information list window D-2 (Fig. 31): On this window, lists of estimation, evaluation, and credit screening done for the user are displayed, and the user can, e.g., click a desired display item to display a window that indicates the detailed contents of the selected item on his or her user terminal 5.

Estimation item confirm window D-3 (Fig. 32): On this window, the user of the user terminal 5 can confirm the detailed contents of estimation previously done for the user. When the user has operated a "negotiation application" button, the control can transit to the negotiation application process (M6); when the user has operated an "examine credit" button, the control can transit to the credit screening process (M5); and when the user has operated "estimated specification image confirm" button, the user can confirm the image of an automobile corresponding to the currently displayed estimated specification of the custom vehicle on the estimated specification image display window D-4 (not shown). When the user has operated an operation button "return to purchase review list", the control can transit to the purchase review information list window D-2 (Fig. 31).

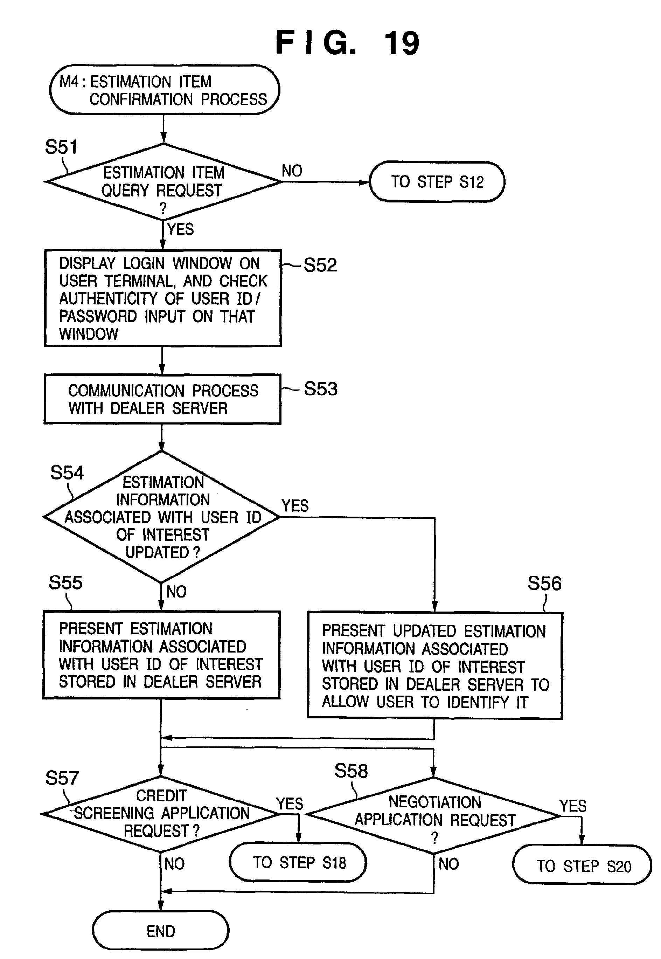

Fig. 19 is a flow chart showing the estimation item confirm process (M4) executed by the vehicle manufacturer server 1.

Steps S51 and S52 in Fig. 19: It is checked if an estimation item query request is issued during the initial process (M1) (step S51: corresponding to step S12 (Fig. 17)). If NO in step S51, the flow returns to step S12 (Fig. 17); otherwise, the ID/password input window D-1 (Fig. 30) is displayed on the user terminal, and authenticity of the user ID and password input to that window is checked (step S52).

Steps S53 and S54: A communication process with the dealer server 2 is executed (step S53), and it is inquired if the dealer server 2 has updated estimation information associated with that user ID (step S54). Note that the communication process in step S53 is linked with step S211 of the control process (Fig. 20) of the dealer server 2 (to be described later).

Step S55: Estimation information which is stored in the dealer server 2 and associated with the user ID is acquired, and the acquired estimation information is displayed on the user terminal 5 of that user using purchase review information list window D-2 (Fig. 31) or the estimation item confirm window D-3 (Fig. 32) in response to operation on that window.

Step S56: The updated estimation information which is stored in the dealer server 2 and associated with the user ID is displayed on the user terminal 5 of that user to allow the user to identify that the information has been updated, using purchase review information list window D-2 (Fig. 31) or the estimation item confirm window D-3 (Fig. 32) in response to operation on that window.

Steps S57 and S58: It is checked if the credit screening application request of the custom vehicle, the specifications of which have been settled, is issued (step S57: corresponding to step S17 (Fig. 17)). If YES in step S57, the flow advances to step S18 (Fig. 17); otherwise, the processing ends.

Furthermore, it is checked if a negotiation application request of the custom vehicle, the specifications of which have been settled, is issued (step S58: corresponding to step S19 (Fig. 17)). If YES in step S58, the flow advances to step S20 (Fig. 17); otherwise, the processing ends.

### <Credit Screening Process (M5), Negotiation Application Process (M6)>

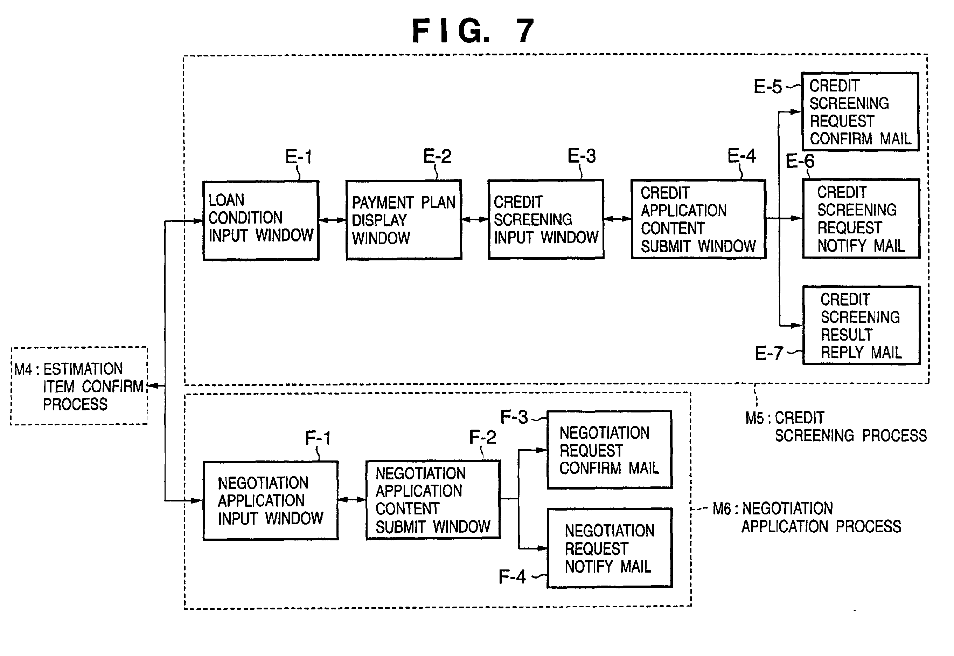

Fig. 7 shows transition of display windows in the credit screening process (M5) and negotiation application process (M6), and an e-mail sending function upon credit screening and negotiation application. The credit screening process (M5) is launched upon operation of the "examine credit" button on the estimation item confirm window D-3 (Fig. 32) displayed by the estimation item confirm process (M4), and the negotiation application process (M6) is launched upon operation of the "negotiation application" button on the estimation item confirm window D-3 (Fig. 32). The control can transit from the credit screening process (M5) and negotiation application process (M6) to the estimation item confirm process (M4).

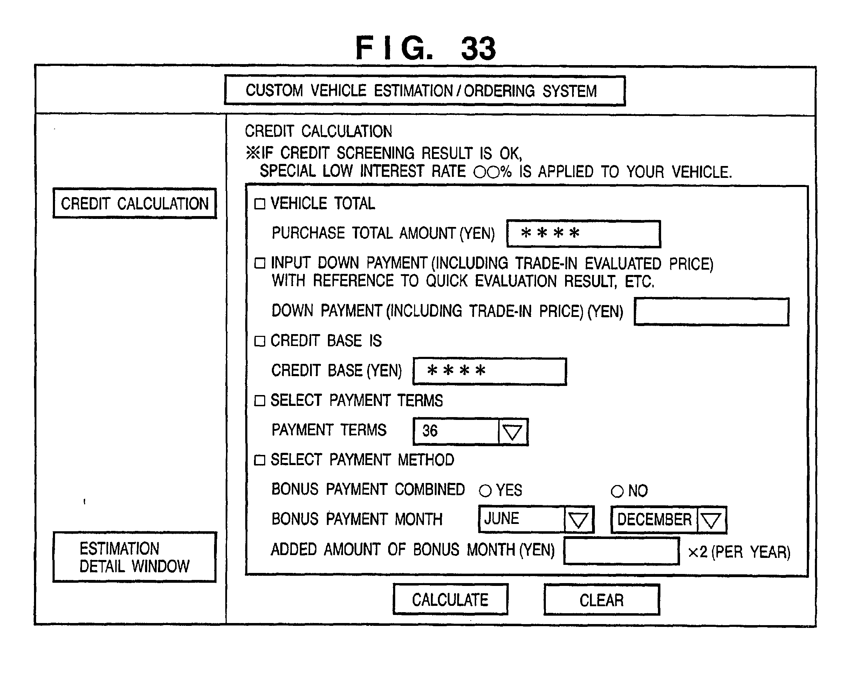

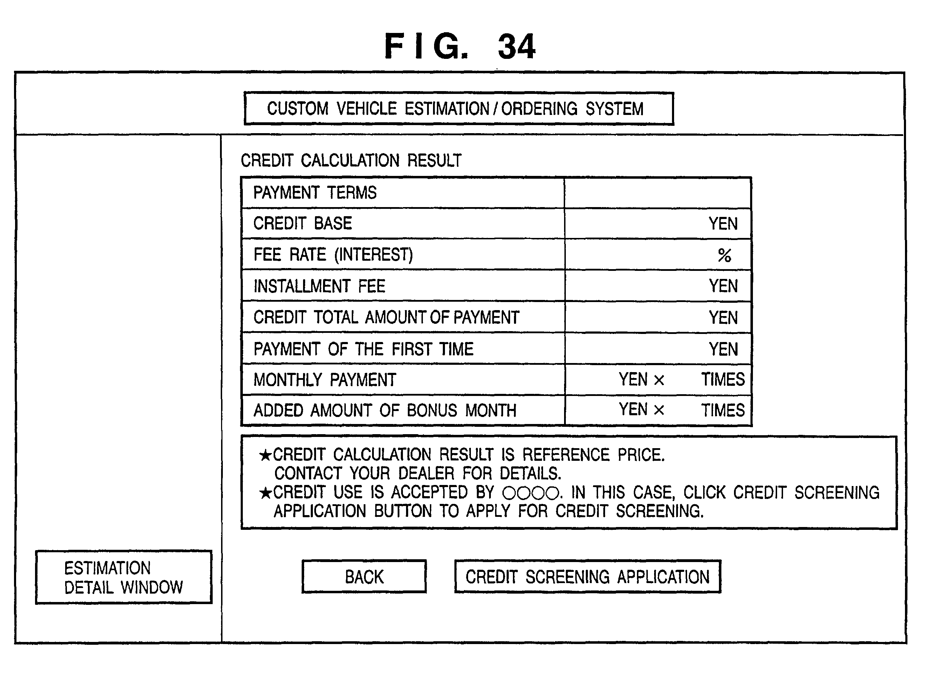

As shown in Fig. 7, as transition of display windows in the credit screening process (M5), a loan condition input window E-1 (Fig. 33), payment plan display window E-2 (Fig. 34), credit screening input window E-3, and credit application content submit window E-4 can be displayed on the user terminal 5.

Loan condition input window E-1 (Fig. 33): On this window, the user of the user terminal 5 can input various items that pertain to credit to be used when he or she purchases the custom vehicle, which is presented by the estimated item selected in the estimation item confirmation process, on installment, and the payment plan display window E-2 (Fig. 34) is displayed on the user terminal 5 upon operation of a "calculate" button after the user inputs the predetermined items.

Payment plan display window E-2 (Fig. 34): This window displays a list of credit calculation results (payment plan) on the basis of the items set on the loan condition input window E-1. Upon operation of a "credit screening application" button on this window, the credit screening application window E-3 is displayed on the user terminal 5.

Credit screening application window E-3 (not shown): On this window, the user of the user terminal 5 can apply to a credit company for credit screening based on the payment plan displayed on the payment plan display window E-2.

Credit application content submit window E-4 (not shown): This window displays information indicating that the credit screening application request was submitted and accepted by the vehicle manufacturer server 1, and the user will receive an e-mail message associated with the screening result.

The estimation item confirm process (M4) includes a function of sending/receiving an e-mail message in response to credit screening application information submitted from the user terminal 5 on the credit application content submit window E-4.

Credit screening request confirm mail E-5: The vehicle manufacturer server 1 that received the credit screening request from the user sends an e-mail message to the mail address previously input by the user to confirm if the user actually submitted the credit screening request.

Credit screening request notify mail E-6: The vehicle manufacturer server 1 sends an e-mail message to the credit company to inform it that the credit screening request was issued from the user. This e-mail message contains the contents of the payment plan displayed on the payment plan display window E-2, information associated with the user, and the like.

Credit screening result reply mail E-7: The credit company that made credit screening sends a reply e-mail message of the screening result to the mail address previously input by the user, and the vehicle manufacturer server 1.

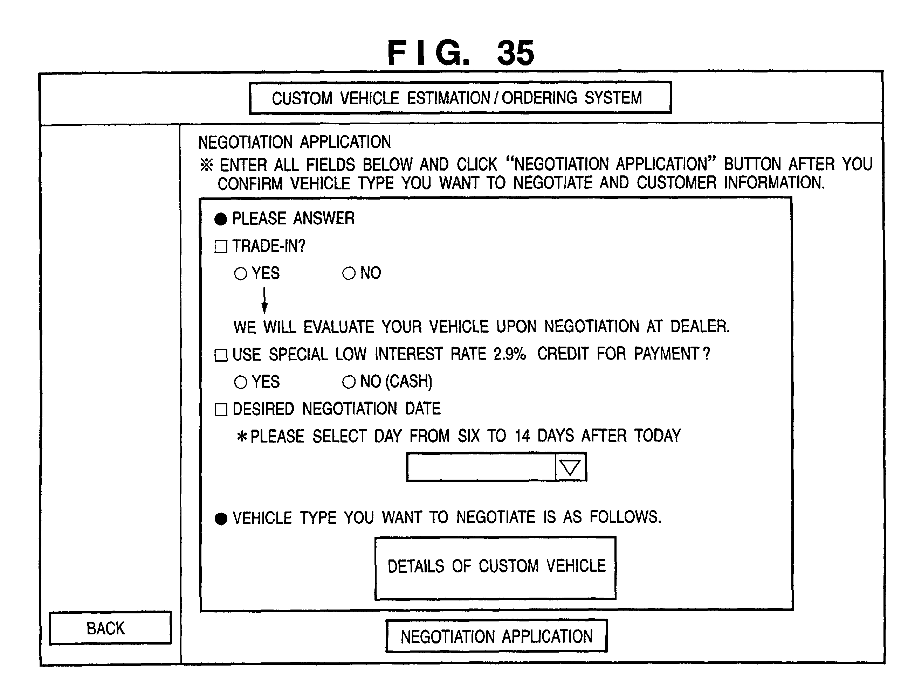

As transition of display windows in the negotiation application process (M6) shown in Fig. 7, a negotiation application input window F-1 (Fig. 35) and negotiation application content submit window F-2 can be displayed on the user terminal 5.

Negotiation application input window F-1 (Fig. 35): On this window, the user of the user terminal 5 can input various items (the presence/absence of a trade-in, the presence/absence of credit use, desired date of negotiation, and the like) associated with negotiation application to the dealer, which presented the estimated price of the custom vehicle presented by estimation items selected in the estimation item confirmation process (M4), and the negotiation application content submit window F-2 is displayed on the user terminal 5 upon operation of a "negotiation application" button after input of the predetermined items.

Negotiation application content submit window F-2 (not shown): This window displays information indicating that the application contents on the negotiation application input window F-1 were submitted and accepted by the vehicle manufacturer server 1, and an e-mail or phone contact associated with negotiation will be made from the corresponding dealer.

The negotiation application process (M6) includes a function of sending/receiving e-mail messages in response to negotiation application information submitted from the negotiation application content submit window F-2 on the user terminal 5.

Negotiation request confirm mail F-3: The vehicle manufacturer server 1 that received the negotiation request from the user sends an e-mail message to the mail address previously input by the user to confirm if the user actually issued the negotiation request.

Negotiation request notify mail F-4: The vehicle manufacturer server 1 sends an e-mail message to the objective dealer to inform it that the negotiation request was received from the user. This e-mail message contains the contents displayed on the negotiation application input window F-1, information associated with the user, and the like.

In this embodiment, as a method of actually placing an order of the custom vehicle to the vehicle manufacturer after the negotiation at the dealer, a method of placing an order from the dealer server 2 to the vehicle manufacturer server 1, a method of placing an order using a dedicated line, or the like may be used.

### <Shipping Query Process (M7), Instruction Process (M8)>

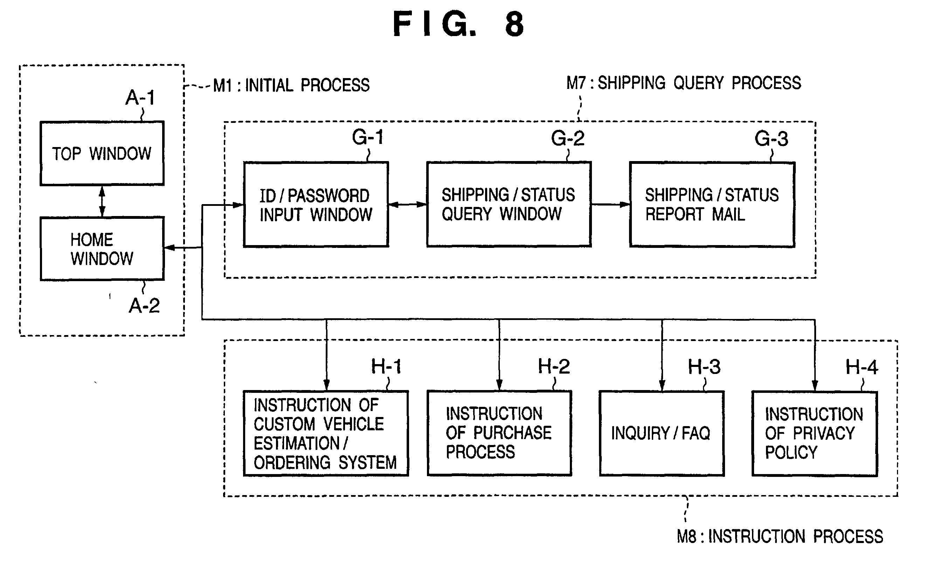

Fig. 8 shows transition of display windows in the shipping query process (M7) and instruction process (M8), and an e-mail sending function upon receiving a shipping query.

The shipping query process (M7) is launched in response to an operation button "ordered vehicle shipping query" on the home window A-2 displayed by the initial process (M1). The instruction process (M8) is launched upon operation of an operation button "about this site", "purchase procedure", "privacy policy", or the like on the home window A-2. The control can transit from the shipping query process (M7) and instruction process (M8) to the initial process (M1) in response to user's operation.

The shipping query process (M7) can display an ID/password input window G-1 (the same as in Fig. 30) and shipping status query window G-2 (Fig. 22) on the user terminal 5, and sends a shipping status report e-mail message G-3 to the corresponding user terminal 5.

ID/password input window D-1 (Fig. 30): On this window, the user of the user terminal 5 inputs the user ID (member ID) and password previously issued to that user, and operates "submit" button to log into this system (vehicle manufacturer server 1). Upon completion of the login process, the shipping status query window G-2 (Fig. 22) is displayed on the user terminal.

Fig. 22 shows an example of the shipping status query window G-2 displayed by the shipping query process (M7). On this display window, the user can recognize the progress status in a plurality of stages from production until shipping of the custom vehicle the delivery of which he or she is looking forward to.

More specifically, the shipping status query window G-2 displays information that specifies the user, custom vehicle, and dealer, and presents the progress status in a plurality of stages from production until shipping of that custom vehicle by means of graphics indicating the current status, and images (photographed images) indicating respective stages. Also, a finished date is displayed for a stage that has been already finished.

When the user has clicked the second leftmost photo image of the production line in the respective stages shown in Fig. 22, photographed images during assembly (e.g., video or still images in a plurality of processes such as a backbone component assembly process, painting process, test process, and the like) are displayed on the user terminal 5.

When the user has clicked the third or fifth leftmost photo in the respective stages shown in Fig. 22, a map image indicating the transportation route and/or the current location upon transportation by a carrier ship or carrier vehicle (car carrier) of the custom vehicle is displayed on the user terminal 5.

The vehicle manufacturer server 1 can acquire information to be displayed on the shipping status query window G-2 shown in Fig. 22 by referring to the progress management DB 32.

More specifically, when the vehicle type ID of the custom vehicle is determined by the aforementioned processes, and an on-line or off-line order of the custom vehicle with that vehicle type ID is placed, since the order number (order ID) of that custom vehicle is issued, the custom vehicle, which is under assembly in progress in the assembly line, can be easily and automatically specified and tracked using the order number upon producing the custom vehicle in the assembly line (production line) 13.

For this purpose, photographing devices 14 may be provided to the assembly process, painting process, test process, and the like in the assembly line 13 of the vehicle manufacturer, as shown in Fig. 1, and images photographed when the custom vehicle reached the corresponding processes may be stored in the progress management DB 32 together with information of photographing dates using the order number (order ID) of the custom vehicle as a key.

As for the transportation route and/or the current position upon transportation, since the coordinate position information of the carrier vehicle 11 can be easily acquired using the GPS communication module 12 or the like mounted on the carrier vehicle 11, as shown in Fig. 1, the acquired coordinate position information may be stored in the progress management DB 32 using the order number (order ID) of the custom vehicle as a key.

Furthermore, after the order of the custom vehicle was placed to the vehicle manufacturer, and an actual production plan was determined in a management computer or the like, the scheduled dates (and times) the custom vehicle will reach the respective processes can be automatically and easily calculated on the basis of the production plane, the production performance (tact) of the assembly line (production line) used, and the like. Hence, an e-mail message that describes the calculated scheduled dates (and times) is sent to the user, and when the user accesses the shipping status query window G-2 (Fig. 22), the current status of the custom vehicle, assembly of which is in progress, may be presented to that user in real time.

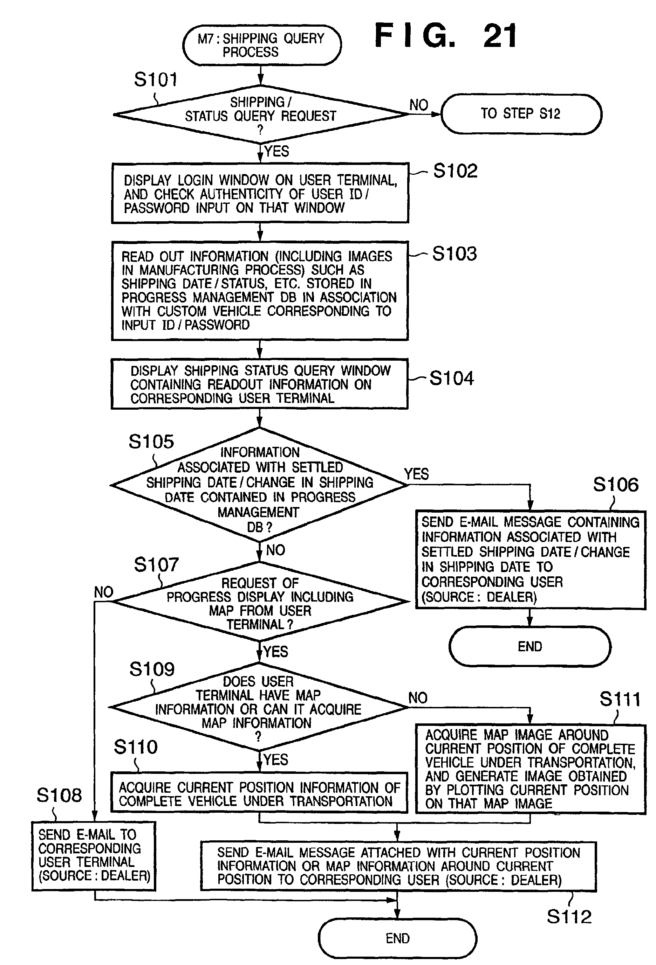

Fig. 21 is a flow chart showing the shipping query process (M7) executed by the vehicle manufacturer server 1.

Steps S101 and S102 in Fig. 21: It is checked if the shipping status query request is issued during the initial process (M1) (step S101: corresponding to step S12 (Fig. 17)). If NO in step S101, the flow returns to step S12 (Fig. 17); otherwise, the ID/password input window D-1 (the same as in Fig. 30) is displayed on the user terminal 5 and authenticity of the user ID and password input to that window is checked (step S102).

Steps S103 and S104: Information (including images in the manufacture processes) such as a shipping date/status, and the like of the custom vehicle corresponding to the input ID/password, which information is stored in the progress management DB 32, is read out (step S103), and the shipping status query window G-2 (Fig. 22) containing the readout information is displayed on the user terminal 5 (step S104).

Steps S105 and S106: It is checked if the progress management DB 32 contains information that pertains to a settled shipping date/change in shipping date (step S105). If NO in step S105, the flow advances to step S107; otherwise, an e-mail message containing the information that pertains to the settled shipping date/change in shipping date is sent to the user to have the dealer as a source (step S106). Note that the information that pertains to the settled shipping date/change in shipping date includes both a case wherein the scheduled shipping date is delayed and a case wherein it is advanced.

Steps S107 and S108: It is checked if the request of progress display including a map is received from the user terminal 5 (step S107). If YES in step S107, the flow advances to step S109; otherwise, an e-mail message indicating that the vehicle will be shipped on the scheduled date is sent to the user of the user terminal 5 to have the dealer as a source (step S108).

Steps S109 to S111: It is checked if the user terminal 5 has map information or can acquire it externally (step S109). If YES in step S109, the current position information of the complete vehicle under transportation, which is stored in the progress management DB 32, is acquired (step S110); otherwise, a map image around the current position information of the complete vehicle under transportation is acquired, and an image obtained by plotting the current position on that map image is generated (step S111).

Step S112: An e-mail message attached with the current position information or the map image around the current position is sent to the user to have the dealer as a source.

According to the aforementioned shipping query process (M7), the user can easily recognize respective stages until shipping of the ordered custom vehicle on his or her user terminal 5 such as a computer or the like, and such process can well live up to expectation of the user who is looking forward to delivery.

In the instruction process (M8) shown in Fig. 8, an instruction H-1 of the custom vehicle estimation/ordering system, an instruction H-2 of the purchase process, an instruction H-3 of inquiry/FAQ, and an instruction H-4 of privacy policy are displayed on the user terminal 5. These instructions (instruction windows: none of them are shown) can be registered in advance in, e.g., the storage device 26 of the vehicle manufacturer server 1.

### [Software Executed by Dealer Server 2]

Software executed by the CPU 21 of the dealer server 2 will be explained below.

Fig. 20 is a flow chart showing the control process executed by the dealer server 2 in this embodiment.

Steps S201, S202, and S204 in Fig. 20: It is checked if a change or update request of the estimated price stored in the estimated price DB 35 is received (step S201). If NO in step S201, the flow jumps to step S209; otherwise, it is checked using the ID and password if the operator is a predetermined user of the dealer (step S202). If it is determined in step S202 that the operator is the predetermined user, login to the dealer server 2 is permitted, and the flow advances to step S203; otherwise, a warning is generated (step S204), and login to the dealer server 2 is denied.

Steps S203 and S205: The estimated prices associated with the dealer, which are currently registered in the estimated price DB 35, are simultaneously displayed (step S203), and the registration contents of the estimated price DB 35 are updated in accordance with input operations on the displayed window (step S205).

Steps S206 and S207: It is checked by referring to the update history of the estimated price DB 35 if the estimated price is to be changed in association with the user from whom the estimation request of the custom vehicle has already been received, and to whom the estimated price of that custom vehicle has already been presented (step S206). If NO in step S206, the flow jumps to step S209; otherwise, the estimated amount per custom vehicle is recalculated (step S207).

Step S208: An e-mail message (estimation result reply mail C-11) indicating that the estimated amount of the custom vehicle has been changed, and the changed amount is sent to the corresponding user terminal. In this manner, the estimated price of an article with desirably selected specifications can be automatically and efficiently provided to the user, and such process can contribute to a price reduction of the article.

Steps S209 and S210: It is checked if the dealer receives the estimation request and/or the evaluation request from the vehicle manufacturer server 1 via estimation/evaluation request confirm mail C-9 (step S209). If NO in step S209, the flow advances to step S211; otherwise, the estimated amount per custom vehicle is calculated with reference to the estimated price DB 35 in accordance with the identification information (specification number) which is acquired via the mail and indicates the custom specifications (step S210). If the estimation/evaluation request confirm mail C-9 contains the evaluation request in step S209, a trade-in is evaluated in accordance with the specification items of the trade-in acquired via that mail. Note that the evaluation may be made by actually confirming the trade-in by a service person of that dealer in a conventional way, or may be automatically made by referring to a database or the like in which the market prices of pre-owed vehicles are set.

Step S211: A communication process with the vehicle manufacturer server 1 is executed. In this process, the estimated price DB 35 undergoes update (equalization) of specification items which are stored in the manufacturer's suggested retail price DB 31 and can be selected by this system from the vehicle manufacturer server 1. Also, the dealer server 2 sends the estimated price for the objective customer (the user of the user terminal 5) to the vehicle manufacturer server 1 when the estimated price has been updated in step S205 or when the request is received, in accordance with the above described process in step S55 of Fig. 19, from the vehicle manufacturer server 1 to display the order review information list window D-2 (Fig. 31) or estimation item confirm window D-3 (Fig. 32) on the user terminal.

### <In case that Estimated Price DB 35 is provided to Automobile Manufacturer>

A case will be explained below with reference to Figs. 36 and 37 wherein the estimated price DB 35 is provided to the automobile manufacturer side, and the estimated price is calculated by the vehicle manufacturer server 1.

Fig. 36 is a schematic diagram showing the overall arrangement of the custom vehicle estimation/ordering system when the estimated price DB 35 is provided to the automobile manufacturer side in this embodiment.

In case of the system arrangement shown in Fig. 36, estimated price DBs 35 are prepared for respective dealers on the automobile manufacturer side unlike in the system arrangement shown in Fig. 1, and are referred to by the vehicle manufacturer server 1 upon calculating the estimated price of a vehicle.

Only when a request is received from a terminal prepared in each dealer, or only when a request is received from a terminal to which a predetermined password (and identification code if necessary) prepared in advance for a given dealer is input, the vehicle manufacturer server 1 reads out estimated prices for respective specification items from the estimated price DB 35 for that dealer, and sends them to the terminal. Also, the vehicle manufacturer server 1 can change/update only estimated prices for respective specification items stored in the estimated price DB for the dealer in accordance with input operations at that terminal.

Note that Fig. 36 illustrates a plurality of estimated price DBs 35. Alternatively, storage areas for respective dealers may be assured in a single database.

On the other hand, since the processing load can be reduced compared to the aforementioned case wherein the dealer server 2 calculates the estimated price, a general computer (dealer terminal) 2A which comprises a communication function to the Internet 3 or the like is provided in place of the dealer server 2 (note that a server computer (2) may be used as in Fig. 1). The dealer terminal 2A refers to (browses)/updates the estimated items of respective specification items stored in the corresponding estimated price DB 35 via the vehicle manufacturer server 1 (if the estimated price DB 35 can be directly accessed without accessing the vehicle manufacturer server 1, the dealer terminal 2A may directly refer to (browse)/update the contents of the database).

Fig. 37 is a flow chart showing the calculation process when the vehicle manufacturer server 1 calculates the estimated price in this embodiment. This process (subroutine) is launched (called) in the system arrangement in which the estimated price DBs 35 are provided to the automobile manufacturer in place of checking the presence/absence of the estimation request in step S44 in the aforementioned estimation/evaluation request process (Fig. 18) or checking the presence/absence of the change/update request of the estimated price DB 35 in step S201 in the control process (Fig. 20) of the dealer server 2.

In the system arrangement shown in Fig. 1, the estimated price which is calculated by the dealer server 2 in correspondence with the user (customer) of the user terminal 5, and is presented to that user, and estimation information for each user ID are saved in that dealer server 2, and when the user issues an estimation item confirm (query) request later or when the estimation information is updated, required information is read out from the dealer server 2, and is re-presented to the user via the vehicle manufacturer server 1 (steps S51 to S56 in Fig. 19, step S211 in Fig. 20).

By contrast, upon adopting the system arrangement shown in Fig. 36, since the estimated price calculation process to be described below is executed by the vehicle manufacturer server 1, the estimated price per custom vehicle for each user is calculated, and the calculated estimated price is saved in the vehicle manufacturer server 1. Also, estimation information for each user ID is saved in the vehicle manufacturer server 1. In this case, when an estimation item confirm (query) request is issued or estimation information is updated in the estimation item confirm process (M4: Fig. 19), the estimated price or updated estimation information saved in the own server is read out in place of the communication process in step S53 in Fig. 19, and the readout information is presented to the user in step S55 or S56.

Also, update (equalization) of specification items which are stored in the manufacturer's suggested retail price DB 31 and selectable by this system with respect to the estimated price DB 35 (step S211 of the control process (Fig. 20) executed by the dealer server 2 in the system arrangement shown in Fig. 1) is automatically done at a predetermined timing by the vehicle manufacturer server 1 in the system arrangement shown in Fig. 36.

Steps S151, S152, and S154 in Fig. 37: It is checked if a change or update request of estimated prices stored in the estimated price DB 35 for respective specification items is received from the dealer terminal 2A (step S151). If NO in step S151, the flow jumps to step S159; otherwise, it is checked using the ID or password or the ID of the terminal itself if the operator is a predetermined user of the dealer (step S152). If it is determined in step S152 that the operator is the predetermined user, login to the vehicle manufacturer server 1 is permitted, and the flow advances to step S153; otherwise, a warning is generated (step S154), and login to the vehicle manufacturer server 1 is denied.

Steps S153 and S155: Required price data are sent to the terminal to simultaneously display the estimated prices associated with the dealer, which are currently registered in the estimated price DB 35, on the dealer terminal 2A (step S153), and the registration contents of the estimated price DB 35 are updated in accordance with price data received by the vehicle manufacturer server 1 in response to input operations on the window displayed on the dealer terminal 2A (step S155).

Steps S156 and S157: It is checked by referring to the update history of the estimated price DB 35 if the estimated price is to be changed in association with the user from whom the estimation request of the custom vehicle has already been received, and to whom the estimated price of that custom vehicle has already been presented (step S156). If NO in step S156, this subroutine ends; otherwise, the estimated amount per custom vehicle is recalculated, and the estimated amount already stored in a storage device (not shown; or another database) of the vehicle manufacturer server 1 is updated by the estimated amount obtained by the recalculation (step S157).

Step S158: An e-mail message (estimation result reply mail C-11) indicating that the estimated amount of the custom vehicle has been changed, and the changed amount is sent to the dealer terminal 2A. If the aforementioned e-mail message is sent to the user terminal 5 in this step, the e-mail message in which an address that specifies the dealer is set as a source is sent. In this manner, the estimated price of an article with desirably selected specifications can be automatically and efficiently provided to the user, and such process can contribute to a price reduction of the article.

Step S159: It is checked if the estimation request is received, and input information for estimation is passed to this subroutine. If this condition is satisfied, the flow advances to step S160; otherwise, this subroutine ends.

Step S160: The estimated amount per custom vehicle is calculated with reference to the estimated price DB 35 in accordance with the identification information (specification number) which is contained in the acquired input information and indicates the custom specifications.

Step S161: The data of the estimated price per custom vehicle calculated in step S160 is stored in a storage device (not shown; or another database) of the vehicle manufacturer server 1 in association with information such as customer information (user ID), identification information indicating the custom specifications, and the like, and is sent to the objective dealer terminal 2A and/or the customer (user of the user terminal 5). If data of the estimated price or the like is directly sent to the user terminal 5 in this step, such data is sent using an e-mail message in which an address that specifies the dealer is set as a source.

When the system arrangement shown in Fig. 36 is adopted, and the process of the flow chart shown in Fig. 37 is executed by the vehicle manufacturer server 1, neither special hardware nor software need be prepared on the dealer side upon introducing the custom vehicle estimation/ordering system according to this embodiment. Hence, operation of the system can be started with minimum time and cost, and system management after the beginning of operation is easy.

According to the above embodiment, the user himself or herself can easily, pleasantly, and interactively select desired specifications from specification items of a custom vehicle that the automobile manufacturer can supply as if he or she were playing a game, and can find himself or herself entertained upon purchasing a vehicle.

The estimated price of the custom vehicle with selected desired specifications can be efficiently provided to the user. Custom vehicles (specific vehicles) even in relatively small production quantity can be provided to the users with relatively low prices, and business operation efficiencies of the dealers and automobile manufacturer can be improved.

In the embodiment mentioned above, an automobile has been exemplified as an article which is to be customized and ordered. However, the present invention is not limited to vehicles such as an automobile, and can be widely applied to industrial products (e.g., electric appliances, prefabricated houses, and the like) which allow mass production, and for which a plurality of different specifications or options can be set.

As many apparently widely different embodiments of the present invention can be made without departing from the spirit and scope thereof, it is to be understood that the invention is not limited to the specific embodiments thereof except as defined in the claims.

## Claims

1. An estimated price providing apparatus **characterized by** comprising:
a storage device (35) in which estimated prices that a dealer can offer are registered in advance for respective predetermined choices in accordance with the choices that are set in advance in association with article specifications that a manufacturer can supply;
customize means (M2) for allowing a user of an information terminal (5) to select an article of desired specifications in accordance with the predetermined choices by operations from the information terminal which is connected via a communication line to allow two-way communications; and
estimated price providing means (M3, M4) for, when the article with the desired specifications is selected by said customize means or when the user makes request operation at the information terminal later, calculating an estimated price when the dealer sells the article with the desired specifications by referring to the estimated prices for respective choices registered in said storage device in accordance with the desired specifications, and providing the calculated estimated price per article to the information terminal.

2. The apparatus according to claim 1, **characterized in that** said estimated price providing means provides the estimated price per article with the desired specifications using an e-mail message in response to user's request operation at the information terminal after said customize means selects the article with the desired specifications.

3. The apparatus according to claim 1 or 2, **characterized in that** at least individual storage areas are assured on said storage device in correspondence with a plurality of dealers,
said customize means includes dealer select means for selecting a dealer that the user of the information terminal prefers from the plurality of dealers, and
said estimated price providing means provides the estimated price per article with the desired specifications by referring to the storage area of said storage device, which correspond to the dealer selected by said dealer select means.

4. The apparatus according to claim 3, **characterized in that** said storage device is managed by a third party different from the plurality of dealers,
said apparatus further comprises estimated price update means for allowing the dealers corresponding to individual storage areas to update storage contents for respective dealers stored in the individual storage areas of said storage device, and
said estimated price providing means (1) can refer to the storage area of said storage device corresponding to the dealer selected by said dealer select means upon providing the estimated price per article with the desired specifications to the information terminal.

5. The apparatus according to claim 3 or 4, **characterized in that** said storage means, said customize means, said dealer select means, and said estimated price providing means are implemented by processing functions in a single information processing apparatus (1).

6. The apparatus according to any one of claims 1 to 5, **characterized in that** said customize means informs of manufacturer's suggested retail prices registered in advance for respective choices by the manufacturer in a process in which the user of the information terminal selects the article with the desired specifications, and
said estimated price providing means provides the estimated price per article with the desired specifications to the information terminal in response to user's request operation at the information terminal after said customize means selects the article with the desired specifications.

7. The apparatus according to any one of claims 1 to 6, **characterized in that** said estimated price providing means provides the estimated price per article with the desired specifications to the information terminal using an e-mail message, in which an address that specifies the dealer as a source is set, in response to user's request operation at the information terminal after said customize means selects the article with the desired specifications.

8. The apparatus according to any one of claims 1 to 7 , **characterized in that** said estimated price providing means provides all estimated prices per article, which were previously provided to the user, to be able to be displayed as a list on the information terminal in response to a user's query request at the information terminal.

9. The apparatus according to claim 3 to 5, **characterized in that** said estimated price providing means transfers an estimation request of a trade-in article to the dealer selected by said dealer select means when the estimation request of the trade-in article is received from the user of the information terminal in a process for providing the estimated price per article with the desired specifications to the information terminal.

10. The apparatus according to any one of claims 1 to 9 , **characterized by** further comprising estimated price update means for permitting to update storage contents of one of storage areas individually prepared on said storage device in correspondence with the plurality of dealers in response to a request from the dealer corresponding to that storage area, and denying update of the storage contents of the storage area by another dealer which does not correspond to the storage area.

11. The apparatus according to claim 10, **characterized in that** said estimated price update means permits to browse the storage contents of one of storage areas individually prepared on said storage device in correspondence with the plurality of dealers in response to a request from the dealer corresponding to that storage area, and denies browsing of the storage contents of the storage area by another dealer which does not correspond to the storage area.

12. The apparatus according to any one of claims 1 to 11, **characterized in that** said estimated price update means denies update of storage contents of the storage areas individually prepared on said storage device in correspondence with the plurality of dealers by the manufacturer.

13. The apparatus according to any one of claims 1 to 12, **characterized in that** the article is an automobile, and
the predetermined choices which are set in advance are restricted to customize a backbone that determines drive performance of the automobile as a first step, and are also restricted to select other specifications to have specifications selected in the first step as top priority in subsequent steps when the user of the information terminal customizes an automobile with desired specifications by said customize means.

14. The apparatus according to claim 13, **characterized in that** said customize means executes in turn selection of drive system components that form a backbone of the automobile which can be manufactured by the manufacturer, and selection of wheel peripheral components registered in advance in correspondence with the selected drive system components.

15. The apparatus according to any one of claims 1 to 14, **characterized in that** at least one of said storage means, said customize means, and said estimated price providing means is managed by the manufacturer.

16. The apparatus according to any one of claims 1 to 15, **characterized in that** said storage means, said customize means, and said estimated price providing means are managed by the manufacturer.

17. An estimated price providing system, which comprises an estimated price providing apparatus (1 or 1 and 2) and an information terminal (5) of a user, which can make two-way communications via a communication line, **characterized in that**
said estimated price providing apparatus comprises:
customize means (M2) for allowing the user of said information terminal to select an article of desired specifications in accordance with predetermined choices which are set in advance in association with product specifications that a manufacturer can supply in response to operation at said information terminal; and
estimated price providing means (M3, M4) for, when the article with the desired specifications is selected by said customize means or when the user makes request operation at said information terminal later, calculating an estimated price when the dealer sells the article with the desired specifications by referring to a storage device in which estimated prices that a dealer can offer are registered in advance in correspondence with the choices, and providing the calculated estimated price per article to said information terminal, and
said information terminal comprises:
control means for providing a man-machine interface according to operation of said customize means to the user, and informing the estimated price per article provided from said estimated price providing means.

18. The system according to claim 17, **characterized in that** at least one of said storage means, said customize means, and said estimated price providing means is managed by the manufacturer.

19. An estimated price providing method that uses an estimated price providing apparatus and an information terminal of a user, which can make two-way communications via a communication line, **characterized by** comprising:
a customize step of making said information terminal access said estimated price providing apparatus, and allowing the user of said information terminal to select an article of desired specifications in accordance with predetermined choices which are set in advance in association with product specifications that a manufacturer can supply in response to operation at said information terminal; and
an estimated price providing step of calculating, when the article with the desired specifications is selected in the customize step or when the user makes request operation at said information terminal later, an estimated price when the dealer sells the article with the desired specifications by referring to a storage device in which estimated prices that a dealer can offer are registered in advance in correspondence with the choices, and providing the calculated estimated price per article to said information terminal.

20. A computer program **characterized by** instructing a computer to operate as an estimated price providing apparatus as set forth in any one of claims 1 to 16.

21. A computer program **characterized by** instructing a computer to implement an estimated price providing method as set forth in claim 19.

22. A computer readable storage medium **characterized by** storing a program code which makes a computer operate as an estimated price providing apparatus as set forth in any one of claims 1 to 16.
